# EUROPEAN PATENT SPECIFICATION

(11) **EP 3 310 460 B1**
(45) Date of publication and mention of the grant of the patent: **08.12.2021**
(21) Application number: 16732996.0
(22) Date of filing: 15.06.2016
(51) Int. Cl.: B01D 53/94, B01J 37/02, B01J 37/12, B01J 23/58, B01J 29/76, F01N 3/28, F01N 3/035, F01N 3/20, F01N 3/08

(54) **SCR-CATALYZED SOOT FILTER WITH INTEGRATED LEAN NOX TRAP CATALYST FOR USE IN PASSIVE SELECTIVE CATALYTIC REDUCTION**
SCR-KATALYSIERTER RUSSFILTER MIT INTEGRIERTEM MAGER-NOX-FALLENKATALYSATOR ZUR VERWENDUNG IN DER PASSIVEN SELEKTIVEN KATALYTISCHEN REDUKTION
FILTRE DE SUIE CATALYSÉE PAR SCR AVEC CATALYSEUR DE PIÈGE DE NOX PAUVRE INTÉGRÉ POUR UNE UTILISATION DANS LA RÉDUCTION CATALYTIQUE SÉLECTIVE PASSIVE

(30) Priority: 16.06.2015 EP 15172347
(43) Date of publication of application: 25.04.2018
(73) Proprietor: BASF SE, 67056 Ludwigshafen am Rhein (DE)
(72) Inventor: GRUBERT, Gerd, 30161 Hannover (DE); NEUBAUER, Torsten, 30853 Langenhagen (DE); PUNKE, Alfred, 38179 Walle (DE)
(74) Representative: BASF IP Association
(86) International application number: PCT/EP2016/063750
(87) International publication number: WO 2016/202855

(56) References cited:
- EP-A1- 1 660 217
- EP-A2- 2 650 496
- WO-A1-2014/080202
- WO-A1-2016/079507
- DE-A1-102005 005 663
- US-B1- 7 062 904

## Description

### TECHNICAL FIELD

The present invention relates to a catalyzed soot filter for the treatment of emissions from an internal combustion engine as well as to a method for its preparation. Furthermore, the present invention relates to a catalyzed soot filter as obtainable from the preparation method as well as to a process for the treatment of emissions from an internal combustion engine and to the use of a catalyzed soot filter according to the present invention.

### INTRODUCTION

As summarized in DiGiulio et al. in Catalysis Today 2014, 231, pp. 33-45, lean-burn engines are more fuel-efficient and produce less CO₂ than traditional, stoichiometric-burn engines. Full commercial implementation of lean-burn engines, however, requires the development of cost-effective catalysts capable of meeting current emissions regulations under lean-burn exhaust conditions, which still represents a major technical challenge. Since the late 1970s, three-way catalysts (TWC) have been employed for the simultaneous reduction of nitrogen oxides (NOx) and the oxidation of unburnt hydrocarbons and carbon monoxide (CO) present in the exhaust of stoichiometric-burn engines. However, these TWCs only sufficiently remediate pollutants if operated in a very narrow region near the stoichiometric combustion regime and exhibit very low NOx conversion if operated under the much higher O₂ concentrations encountered in lean-burn engine exhausts. Two existing solutions for the reduction of NOx in this case include the lean NOx trap (LNT) and NH₃-selective catalytic reduction (NH₃-SCR) catalysts. Both LNT and NH₃-SCR technologies however suffer from different but significant drawbacks. For example, LNT catalysts require high platinum group metal loadings, resulting in a significant cost per catalyst. NH₃-SCR catalysts are less expensive, but the dosing system required to deliver urea to the exhaust stream adds to the total cost of the exhaust system.

As reported in DiGiuglio et al. in Catalysis Today 2014, 231, pp. 33-45, a new technology referred to as the "passive-ammonia" or "urea-less" SCR approach has been recently demonstrated. As in the case of LNT systems, the passive-NH₃ approach is based on a periodic lean-rich cycling, but does not include an LNT catalyst. Instead, a TWC is used to generate NH₃ during periods of rich operation. The NH₃ thus generated is subsequently stored on a downstream, under-floor SCR catalyst. After a sufficient amount of NH₃ has been stored, the engine switches back to lean operation and the stored NH₃ is used to reduce NOx that slips un-reacted from the upstream TWC.

Apart from said technologies, efforts have been made to incorporate SCR catalyst technologies in soot filters for increasing the efficiency of exhaust gas treatment, in particular in application involved in the use of a diesel combustion engine. Thus, WO 2012/135871 A1 relates to multi-component filters for emissions control and in particular to a catalytic article comprising a wall flow filter having gas-permeable walls, a hydrolysis catalyst, and an optional soot oxidation catalyst, a selective catalytic reduction catalyst permeating the walls, an ammonia oxidation catalyst and an oxidation catalyst to oxidize CO and hydrocarbons. WO 2011/140251 A2, on the other hand, relates to integrated SCR and ammonia oxidation (AMOX) catalyst systems and in particular to a catalyst system including a first zone to abate nitrogen oxides by selective catalytic reduction, a second zone to oxidize ammonia, and a third zone to oxidize carbon monoxide and hydrocarbons. WO 20011/041769 A2 concerns four-way diesel catalysts for simultaneously remediating the carbon monoxide, nitrogen oxides, particulate matter, and gaseous hydrocarbons present in diesel engine exhaust streams.

In addition to these, multi-component systems have been further proposed in an attempt to provide a highly efficient exhaust gas treatment system. Thus, WO 2010/114873 A2 relates to an emissions treatment system with ammonia-generating and SCR catalysts such as an NOx storage reduction (NSR) catalyst or a lean NOx trap catalyst, and an SCR catalyst disposed downstream of the ammonia-generating catalyst.

EP 2428 659 A1, on the other hand, relates to a catalyst for the removal of NOx from diesel exhaust gas employing a flow through substrate onto which copper chabazite is provided in the downstream portion and barium oxide as well as platinum group metals are provided in the up-stream portion. WO 2004/076829 A1 relates to an exhaust gas purification system for the selective catalytic reduction of nitrogen oxides in the lean exhaust gas of internal combustion engines involving the use of an NOx storage catalyst applied to a diesel particulate filter which is located upstream of an SCR catalyst. WO 2014/072067 A1 concerns a catalyst system for treating NOx- and particle-containing diesel exhaust gas involving the use of a nitrogen oxide storage catalyst containing a nitrogen oxide storage component and a precious metal which is located upstream of a catalyzed soot filter containing platinum group metals.

EP 2650496 A2 relates a catalyzed wall-flow filter comprising a NOx absorber catalyst (NAC) comprising an oxidation catalyst and an SCR catalyst. DE 102005005663 A1 similarly discloses a catalytic particle filter with NOₓ storage catalyst and an SCR catalyst arranged on the intake and exhaust sides respectively. WO 2014/080202 A1 relates the field of catalytic soot filters comprising an oxidation catalyst, wherein an optional NOx absorber catalyst and SCR catalyst are modular emission control devices preferably disposed on a separate substrate monolith located either upstream or downstream of the CSF. EP 1660217 A1 also discloses a filter catalyst wherein one side with a nitrogen oxide storage catalyst and on the other side with an SCR catalyst. WO 2016079507A1 catalytic soot filter comprising a palladium NOx absorption catalyst on ceria or zeolite and a Cu-CHA zeolite SCR.

Nevertheless, there remains the need for the provision of a highly efficient emissions treatment system operating with the least possible number of components and low amounts of platinum group metals contained therein respectively yet affording a high efficiency relative to the reduction of both NOx and CO in exhaust gases while generating the lowest possible amount of excess ammonia in the course thereof.

### DETAILED DESCRIPTION

It was therefore the object of the present invention to provide a catalyzed soot filter which affords a high conversion of NOx and CO in exhaust gases in addition to the filtration of particulate matter relative to the amount of platinum group metals employed therein, and in particular with respect to the amount of platinum. Furthermore, it was the object of the present invention to provide a catalyzed soot filter which displays an excellent NOx conversion efficiency when employed in a passive SCR system, *i.e.* when used in combination with a component located up-stream thereof which generates ammonia in situ for the conversion of NOx to nitrogen, yet without generating large amounts of excess ammonia in the course thereof. Thus, it has surprisingly been found that by employing a specific arrangement of a lean NOx trap catalyst and a catalyst for selective catalytic reduction in separate portions of a catalyzed soot filter, a high efficiency in NOx conversion and CO oxidation may be obtained using comparatively low amounts of platinum group metals in the lean NOx trap and in particular of platinum, palladium, and rhodium. Furthermore, it has quite unexpectedly been found that said particularly high efficiency in NOx conversion and CO oxidation may be achieved in a passive SCR system wherein ammonia is generated *in situ* upstream of the aforementioned catalyzed soot filter. In particular, it has been found that by using such an arrangement, it is also possible to maintain low levels of excess ammonia exiting the catalyzed soot filter.

Therefore, the invention relates to a catalyzed soot filter (CSF), wherein the CSF comprises a porous wall flow substrate, a lean NOx trap (LNT) catalyst, and a catalyst for selective catalytic reduction (SCR),
the wall flow substrate comprising an inlet end, an outlet end, a substrate axial length extending between the inlet end and the outlet end, and a plurality of channels defined by internal walls of the wall flow substrate, wherein the plurality of channels comprise inlet channels having an open inlet end and a closed outlet end, and outlet channels having a closed inlet end and an open outlet end,
wherein the LNT catalyst is provided on a portion of the surface of the inlet channel walls and on at least a portion of the surface of the pores within the channel walls underneath the surface of the channel walls coated with the LNT catalyst,
wherein the portion of the inlet channel walls coated with the LNT catalyst extends from the inlet end to x % of the substrate axial length with 0 < x < 100, wherein the LNT catalyst comprises one or more platinum group metals, wherein the LNT catalyst comprises one or more alkaline earth metals,
wherein the SCR catalyst is provided on a portion of the surface of the outlet channel walls and on at least a portion of the surface of the pores within the channel walls underneath the surface of the portions of the channel walls coated with the SCR catalyst,
wherein the portion of the outlet channel walls coated with the SCR catalyst extends from the outlet end to 100-x % of the substrate axial length.

As regards the extend to which the respective lean NOx trap catalyst and catalyst for selective catalytic reduction are provided on the respective inlet and outlet channels of the catalyzed soot filter according to the present invention, no particular restrictions apply such that in principle any portion of the inlet channel walls may be provided with the lean NOx trap catalyst extending from the inlet end to less than the entire substrate axial length, and accordingly any portion of the outlet channel walls may be provided with the catalyst for selective catalytic reduction extending from the outlet end to a length less than the entire substrate axial length, provided that the length of the palladium component provided from the inlet end and the length of the platinum component provided from the outlet end amount to the substrate axial length, *i.e.* 100% thereof. Thus, by way of example, x may range anywhere from 5 to 95, wherein it is preferred that x ranges from 15 to 85, more preferably from 25 to 75, more preferably from 35 to 65, and more preferably from 45 to 55. Alternatively, x may range from 5 to 65, wherein it is preferred that x ranges from 15 to 55, more preferably from 20 to 45, and more preferably from 25 to 35.

Regarding the porous wall flow substrate employed in the catalyzed soot filter, no particular restrictions apply as to its shape and dimensions nor with respect to the material with which it is made. According to the present invention, it is, however, preferred that the porous wall flow substrate is a honeycomb substrate with alternately plugged inlet and outlet ends such that each wall of the wall flow substrate respectively has a first surface which is a surface of an inlet channel and a second surface which is a surface of an outlet channel.

Same applies accordingly relative to the porosity of the walls of the wall flow substrate contained in the catalyzed soot filter such that said porosity may range anywhere from 40 to 85 %, and preferably ranges from 45 to 80 %, more preferably from 50 to 75 %, more preferably from 55 to 70 %, and more preferably in the range of from 60 to 65 %. As regards the porosity as defined in the present application, it is preferred that said porosity is obtained via the mercury intrusion method, more preferably according to ISO 15901-1:2005.

As regards the average pore size of the walls of the wall flow substrate employed in the inventive catalyzed soot filter, again no particular restrictions apply such that wall flow substrates displaying any suitable average pore size may be employed. Thus, by way of example, the average pore size of the walls of the substrate may be in the range of from 5 to 50 µm, and preferably in the range of from 10 to 40 µm, more preferably from 13 to 35 µm, more preferably from 15 to 30 µm, more preferably from 17 to 25 µm, and more preferably from 18 to 22 µm. As for the porosity, it is noted that the average pore size of the walls of the substrate the uncoated wall flow substrate, *i.e.* prior to providing the SCR catalyst and the palladium and platinum components thereon. Furthermore, as for the porosity of the substrate, also the average pore size of the walls as defined in the present application preferably refers to the average pore size as determined by mercury porosimetry, and more preferably as obtained according to ISO 15901-1:2005.

As noted above, there is no particular restriction relative to the material of which the wall flow substrate consists such that by way of example it may comprise one or more selected from the group consisting of metals, metal oxides, and ceramic materials, wherein preferably the material of which the wall flow filter consists comprises one or more selected from the group consisting of cordierite, aluminum titanate, silicon carbide, mullite, and mixtures of two or more thereof, wherein more preferably the wall flow substrate is made of cordierite, aluminum titanate, or silicon carbide, and preferably of silicon carbide.

According to the present invention, the lean NOx trap catalyst and the catalyst for selective catalytic reduction are respectively provided on the surface of the channel walls of the wall flow substrate as well as on at least a portion of the surface of the pores within the channel walls underneath the surface of the channel walls coated therewith. Accordingly, the respective catalyst component penetrates the channel walls in the portions of the wall flow substrate on which it is respectively provided such that at least a portion of the pores contained within the walls of the wall flow substrate beneath the portions coated with the respective catalytic component are equally coated therewith. According to the present invention, there is no particular restriction as to the extend to which the pores located within the channel walls underneath the coated portions are themselves coated with the catalyst component such that the possibilities given by the present invention range from only coating the pores within the channel walls located in the immediate vicinity of the surface thereof to the coating of the surface of substantially all of the pores located within the channel walls underneath the surface coated with the respective catalyst component. Within the meaning of the present invention, a coating of the surface of the pores within the channel walls encompasses only a portion of the surface within a given pore being coated with the respective catalyst component. Thus, by way of example, as regards the lean NOx trap catalyst, it may be provided on at least a portion of the surface of the pores within the channel walls underneath the surface of the channel walls coated with the lean NOx trap catalyst extending from the surface of the inlet channel walls coated with the lean NOx trap catalyst to a depth of 10% or more of the thickness of the walls of the uncoated substrate. According to the present invention, however, it is preferred that the lean NOx trap catalyst is provided on at least a portion of the surface of the pores within the channel walls underneath the surface of the channel walls coated with the lean NOx trap catalyst extending from the surface of the inlet channel walls coated with the lean NOx trap catalyst to a depth of 15% or more of the thickness of the walls of the uncoated substrate, and more preferably to a depth of 20% or more, more preferably of 35% or more, more preferably of 40% or more, more preferably of 50% or more, and more preferably to a depth of 70% or more of the thickness of the walls of the uncoated substrate.

Same applies accordingly with respect to the SCR catalyst such that according to the present invention the SCR catalyst may be provided by way of example on at least a portion of the surface of the pores within the channel walls underneath the surface of the portions of the channel walls coated with the SCR catalyst extending from the surface of the outlet channel walls coated with the SCR catalyst to a depth of 10% or more of the thickness of the walls of the uncoated substrate, wherein preferably the SCR catalyst is provided on at least a portion of the surface of the pores within the channel walls underneath the surface of the portions of the channel walls underneath the surface of the portions of the channel walls coated with the SCR catalyst extending from the surface to a depth of 15% or more, more preferably to a depth of 20% or more, more preferably of 35% or more, more preferably of 40% or more, more preferably of 50% or more, and more preferably to a depth of 70% or more of the thickness of the walls of the uncoated substrate.

As regards the method according to which the respective penetration of the lean NOx trap catalyst and of the catalyst for selective catalytic reduction within the channel walls according to any of the particular and preferred embodiments of the present invention may be determined, no particular restrictions apply such that any conceivable method may be employed to this end. It is, however, preferred according to the present invention that the depth to which the lean NOx trap catalyst and the catalyst for selective catalytic reduction respectively extend within the channel walls is determined via scanning electron microscopy (SEM) of a cross-section of the coated substrate.

As regards the SCR catalyst comprised in the catalyzed soot filter according to the present invention, no particular restriction applies relative to the materials contained therein provided that the selective catalytic reduction of NOx to N₂ via reduction with ammonia may be catalyzed by said material. Thus, any suitable SCR-active material may be comprised in the SCR catalyst. According to the present invention it is however preferred that the SCR catalyst comprises one or more zeolites, and more preferably one or more zeolites having a structure type selected from the group consisting of BEA, CHA, FAU, FER, HEU, LEV, MEI, MEL, MFI, MOR, including mixed structures and combinations of two or more thereof, more preferably from the group consisting of BEA, CHA, LEV, MFI, including mixed structures and combinations of two or more thereof, wherein more preferably the one or more zeolites are of the BEA and/or CHA structure type, preferably of the CHA structure type, wherein more preferably the one or more zeolites comprise chabazite, the one or more zeolites preferably being chabazite.

According to the present invention it is yet further preferred that the one or more zeolites comprised by the SCR catalyst according to any of the particular and preferred embodiments of the present invention contain one or more transition metals. As regards the one or more transition metals preferably contained in the one or more zeolites preferably comprised by the SCR catalyst, no particular restrictions apply such that in principle any conceivable transition metal may be contained therein. It is, however, preferred according to the present invention that the one or more zeolites contain one or more transition metals selected from the group consisting of Pt, Pd, Rh, Cu, Co, Cr, Ni, Fe, V, Nb, and combinations of two or more thereof, more preferably one or more transition metals selected from the group consisting of Cu, Co, Cr, Ni, Fe, and combinations of two or more thereof, wherein more preferably the one or more zeolites contain Cu and/or Fe, preferably Cu.

Regarding the particular and preferred embodiments of the present invention wherein the one or more zeolites preferably comprised in the SCR catalyst of the catalyzed soot filter contain one or more transition metals, there is no particular restriction as to the state in which the respective transition metals are contained in the one or more zeolites and in particular the method according to which the one or more transition metals are introduced into the zeolite. It is however preferred according to the present invention that the one or more transition metals contained in the one or more zeolites preferably comprised in the SCR catalyst have been introduced into the zeolite by ion-exchange and/or by impregnation, wherein it is particularly preferred that the one or more transition metals have been introduced therein by ion-exchange.

As regards the amount in which the one or more preferred zeolites optionally containing one or more transition metals are contained in the catalyzed soot filter of the present invention, no particular restriction applies such that these may be contained therein in any suitable amount. Thus, by way of example, the one or more zeolites optionally containing one or more transition metals may be contained in the catalyzed soot filter as SCR catalyst in an amount ranging anywhere from 3.1 to 366.1 g/L (0.05 to 6 g/in³) calculated as the total weight of the one or more zeolites, optionally containing one or more transition metals, in the calcined state and based on the volume of the catalyzed soot filter measured from the outlet end up to 100-x % of the substrate axial length, and more preferably from 6.1 to 305.1 g/L (0.1 to 5 g/in³), more preferably from 30.5 to 244.1 g/L (0.5 to 4 g/in³), more preferably from 48.8 to 183.1 g/L (0.8 to 3 g/in³), more preferably from 61.0 to 152.6 g/L (1 to 2.5 g/in³), more preferably from 79.3 to 122.0 g/L (1.3 to 2 g/in³), and more preferably from 91.5 to 115.9 g/L (1.5 to 1.9 g/in³).

Within the meaning of the present invention, the term "calcined state" preferably refers to the state of the one or more zeolites optionally containing one or more transition metals after calcining thereof in air at 450 °C for one hour.

Concerning the size of the particles of the SCR catalyst which is provided on the wall flow substrate in the catalyzed soot filter, no particular restrictions apply provided that the particles may be provided not only on the surface of the inlet channel walls but also on at least a portion of the surface of the pores within the channel walls underneath the surface of the channel walls. For achieving this, it is preferred that the average particle size D90 of the SCR catalyst is 25 % or less of the average pore size of the walls of the substrate. Thus, by way of example, the average particle size D90 of the SCR catalyst may range anywhere from 0.5 to 20 µm, more preferably the average particle size D90 ranges from 1 to 15 µm, more preferably of from 3 to 10 µm, more preferably of from 4 to 8 µm, and more preferably of from 5 to 7 µm.

According to the present invention, the average particle size D90 refers to the average particle size calculated from the particle size distribution as preferably obtained from laser diffraction and more preferably as obtained according to ISO 13320:2009.

According to the present invention, there is no particular restriction as to the amounts of the lean NOx trap catalyst which may be provided on the catalyzed soot filter. Thus, the lean NOx trap catalyst may be contained in the catalyzed soot filter and in particular in the portion of the catalyzed soot filter coated with the lean NOx trap catalyst extending from the inlet end to x% of the substrate axial length in an amount ranging anywhere from 3.1 to 366.1 g/L (0.05 to 6 g/in³) based on the volume of the catalyzed soot filter measured from the inlet end up to x% of the substrate axial length. According to the present invention it is however preferred that the lean NOx trap catalyst is contained in the portion of the catalyzed soot filter coated with the lean NOx trap catalyst extending from the inlet end to x% of the substrate axial length in an amount in the range of from 6.1 to 305.1 g/L (0.1 to 5 g/in³), and more preferably from 30.5 to 244.1 g/L (0.5 to 4 g/in³), more preferably from 48.8 to 183.1 g/L (0.8 to 3 g/in³), more preferably from 61.0 to 152.6 g/L (1 to 2.5 g/in³), more preferably from 79.3 to 122.0 g/L (1.3 to 2 g/in³), and more preferably from 91.5 to 115.9 g/L (1.5 to 1.9 g/in³).

According to the present invention the lean NOx trap catalyst comprises one or more alkaline earth metals and preferably one or more alkaline earth metals selected from the group consisting of Mg, Ca, Ba, Sr, and combinations of two or more thereof. According to the present invention it is yet further preferred that the lean NOx trap catalyst comprises one or more alkaline earth metals selected from the group consisting of Mg, Ca, Ba, and combinations of two or more thereof, wherein even more preferably Mg and/or Ba, and preferably Ba is contained as the alkaline earth metal in the lean NOx trap catalyst according to particular and preferred embodiments of the present invention. As regards the form in which the alkaline earth metals may be contained in the lean NOx trap catalyst, no particular restrictions apply, wherein preferably the one or more alkaline earth metals according to the particular and preferred embodiments of the present invention are contained in the oxide form in the lean NOx trap catalyst.

According to the present invention, there is no particular restriction as to the amounts of the one or more alkaline earth metals which are preferably contained in the lean NOx trap catalyst and accordingly contained in the portion of the catalyzed soot filter coated with the lean NOx trap catalyst extending from the inlet end to x% of the substrate axial length. Thus, the one or more alkaline earth metals according to any of the particular and preferred embodiments of the present invention may be contained in the portion of the catalyzed soot filter coated with the lean NOx trap catalyst extending from the inlet end to x% of the substrate axial length in an amount ranging anywhere from 0.6 to 122.0 g/L (0.01 to 2 g/in³) of the one or more alkaline earth metals calculated as the oxide and based on the volume of the catalyzed soot filter measured from the inlet end up to x% of the substrate axial length. According to the present invention it is however preferred that the one or more alkaline earth metals are contained in the portion of the catalyzed soot filter coated with the lean NOx trap catalyst extending from the inlet end to x% of the substrate axial length in an amount in the range of from 3.1 to 61.0 g/L (0.05 to 1 g/in³), and more preferably from 6.1 to 48.8 g/L (0.1 to 0.8 g/in³), more preferably from 9.2 to 36.6 g/L (0.15 to 0.6 g/in³), more preferably from 12.2 to 27.5 g/L (0.2 to 0.45 g/in³), more preferably from 15.3 to 23.2 g/L (0.25 to 0.38 g/in³), more preferably from 17.1 to 21.4 g/L (0.28 to 0.35 g/in³), more preferably from 18.3 to 20.1 g/L (0.30 to 0.33 g/in³), more preferably from 18.9 to 19.5 g/L (0.31 to 0.32 g/in³). Within the meaning of the present invention, the oxides of the alkaline earth metals according to the particular and preferred embodiments are MgO, CaO, BaO, and SrO.

According to the present invention it is preferred that the lean NOx trap catalyst comprises one or more oxygen storage components and preferably one or more oxygen storage components selected from the group consisting of zirconia, ceria, lanthana, praseodymia, neodymia, and mixtures thereof. According to the present invention it is yet further preferred that the lean NOx trap catalyst comprises one or more oxygen storage components selected from the group consisting of ceria, lanthana, praseodymia, neodymia, and mixtures thereof, wherein more preferably the oxygen storage component comprises ceria and/or praseodymia. According to the present invention it is particularly preferred that the oxygen storage component comprised in the lean NOx trap catalyst comprises ceria, wherein more preferably the oxygen storage component comprised in the lean NOx trap catalyst is ceria and/or praseodymia. According to the present invention it is particularly preferred that the oxygen storage component comprised in the lean NOx trap catalyst is ceria. As defined in the present application, zirconia, ceria, lanthana, pra-seodymia, neodymia preferably refer to the compounds ZrO₂, CeO₂, La₂O₃, Pr₆O₁₁, and Nd₂O₃, respectively.

According to the present invention, there is no particular restriction as to the amounts of the one or more oxygen storage components which are preferably contained in the lean NOx trap catalyst and accordingly contained in the portion of the catalyzed soot filter coated with the lean NOx trap catalyst extending from the inlet end to x% of the substrate axial length, provided that said one or more components are suited for reversibly storing oxygen from oxygen gas under given conditions. Thus, the one or more oxygen storage components according to any of the particular and preferred embodiments of the present invention may be contained in the portion of the catalyzed soot filter coated with the lean NOx trap catalyst extending from the inlet end to x% of the substrate axial length in an amount ranging anywhere from 0.6 to 183.1 g/L (0.01 to 3 g/in³) based on the volume of the catalyzed soot filter measured from the inlet end up to x% of the substrate axial length. According to the present invention it is however preferred that the one or more oxygen storage components are contained in the portion of the catalyzed soot filter coated with the lean NOx trap catalyst extending from the inlet end to x% of the substrate axial length in an amount in the range of from 3.1 to 122.0 g/L (0.05 to 2 g/in³), and more preferably from 6.1 to 91.5 g/L (0.1 to 1.5 g/in³), more preferably from 12.2 to 73.2 g/L (0.2 to 1.2 g/in³), more preferably from 18.3 to 61.0 g/L (0.3 to 1 g/in³), more preferably from 24.4 to 48.8 g/L (0.4 to 0.8 g/in³), more preferably from 27.5 to 42.7 g/L (0.45 to 0.7 g/in³), more preferably from 30.5 to 36.6 g/L (0.5 to 0.6 g/in³), more preferably from 32.3 to 33.6 g/L (0.53 to 0.55 g/in³).

Same applies accordingly relative to the amount of the SCR catalyst such that it may for example be contained in the catalyzed soot filter and in particular in the portion of the catalyzed soot filter coated with the SCR catalyst extending from the outlet end to 100-x% of the substrate axial length in an amount ranging anywhere from 3.1 to 366.1 g/L (0.05 to 6 g/in³) based on the volume of the catalyzed soot filter measured from the outlet end up to 100-x% of the substrate axial length. According to the present invention it is however preferred that the SCR catalyst is contained in the portion of the catalyzed soot filter coated with the SCR catalyst extending from the outlet end to 100-x% of the substrate axial length in an amount in the range of from 6.1 to 305.1 g/L (0.1 to 5 g/in³), and more preferably in an amount in the range of from 30.5 to 244.1 g/L (0.5 to 4 g/in³), more preferably from 48.8 to 183.1 g/L (0.8 to 3 g/in³), more preferably from 61.0 to 152.6 g/L (1 to 2.5 g/in³), more preferably from 79.3 to 122.0 g/L (1.3 to 2 g/in³), and more preferably from 91.5 to 115.9 g/L (1.5 to 1.9 g/in³). For sake of completeness, it is noted that within the meaning of the present application, the amounts of materials in the catalyzed soot filter and other catalyzed monoliths expressed in g/in³ or g/ft³ reflect the loading of material in question in grams of the (catalytic) component volume of the monolith. To this effect, the monolith or honeycomb volume is calculated based on its cross-sectional area and length. As regards the further components which may be contained in the lean NOx trap catalyst in addition to the one or more components suitable for trapping NOx and preferably in addition to the one or more alkaline earth metals according to any of the particular and preferred embodiments of the present invention, no restrictions apply such that any conceivable one or more further components may be contained therein. According to the present invention it is however preferred that the lean NOx trap catalyst comprises one or more platinum group metals, and more preferably one or more platinum group metals selected from the group consisting of platinum, palladium, rhodium, iridium, and combinations of two or more thereof. More preferably, the lean NOx trap catalyst comprises one or more platinum group metals selected from the group consisting of platinum, palladium, rhodium, and combinations of two or more thereof, wherein more preferably, the lean NOx trap catalyst comprises platinum and more preferably platinum and palladium, wherein even more preferably platinum, palladium, and rhodium are contained as the platinum group metals in the lean NOx trap catalyst according to any of the particular and preferred embodiments of the present invention.

As regards the present invention, one or more platinum group metals are contained in the lean NOx trap catalyst and accordingly are contained in the portion of the catalyzed soot filter coated with the lean NOx trap catalyst extending from the inlet end to x% of the substrate axial length, no particular restrictions apply provided that the lean NOx trap catalyst may effectively trap NOx contained in exhaust gas. Thus, by way of example, the one or more platinum group metals contained in the portion of the catalyzed soot filter coated with the NOx trap catalyst extending from the inlet end to x% of the substrate axial length may be contained therein in an amount ranging anywhere from 0.035 to 7.06 g/L (1 to 200 g/ft³) of the one or more platinum group metals calculated as the element and based on the volume of the catalyzed soot filter measured from the inlet end up to x% of the substrate axial length. It is, however, preferred according to the present invention that the one or more platinum group metals are contained in the portion of the catalyzed soot filter coated with the lean NOx trap catalyst extending from the inlet end to x% of the substrate axial length in an amount in the range of from 0.177 to 5.30 g/L (5 to 150 g/ft³) of the one or more platinum group metals calculated as the element and based on the volume of the catalyzed soot filter measured from the inlet end up to x% of the substrate axial length, wherein more preferably the one or more platinum group metals are contained in the portion of the catalyzed soot filter coated with the lean NOx trap catalyst in an amount in the range of from 0.353 to 4.24 g/L (10 to 120 g/ft³), more preferably from 1.06 to 3.53 g/L (30 to 100 g/ft³), more preferably from 1.41 to 2.83 g/L (40 to 80 g/ft³), more preferably from 1.77 to 2.47 g/L (50 to 70 g/ft³), and more preferably from 1.94 to 2.30 g/L (55 to 65 g/ft³).

According to the present invention, it is particularly preferred that the lean NOx trap catalyst comprises platinum. According to said preferred embodiments, there is again no particular restriction according to the present invention as to the amounts of platinum which may be contained in the portion of the catalyzed soot filter coated with the lean NOx trap catalyst extending from the inlet end to x% of the substrate axial length. Thus, by way of example, platinum may be contained in the portion of the catalyzed soot filter coated with the lean NOx trap catalyst extending from the inlet end to x% of the substrate axial length in an amount ranging anywhere from 0.018 to 6.36 g/L (0.5 to 180 g/ft³) of platinum calculated as the element and based on the volume of the catalyzed soot filter measured from the inlet end up to x% of the substrate axial length, wherein it is preferred that platinum is contained in the portion of the catalyzed soot filter coated with the lean NOx trap catalyst in an amount in the range of from 0.035 to 4.94 g/L (1 to 140 g/ft³), more preferably from 0.177 to 3.88 g/L (5 to 110 g/ft³), more preferably from 0.353 to 3.18 g/L (10 to 90 g/ft³), more preferably from 1.06 to 2.47 g/L (30 to 70 g/ft³), more preferably from 1.41 to 2.12 g/L (40 to 60 g/ft³), more preferably from 1.77 to 1.94 g/L (50 to 55 g/ft³).

According to the present invention it is further preferred that the lean NOx trap catalyst comprises palladium, wherein palladium is contained in the portion of the catalyzed soot filter coated with the lean NOx trap catalyst extending from the inlet end to x% of the substrate axial length. As for the particular and preferred embodiments of the present invention comprising platinum in the lean NOx trap catalyst, there is again no particular restriction as to the amount in which palladium may be contained in the portion of the catalyzed soot filter coated with the NOx trap catalyst. Thus, by way of example, palladium contained in the portion of the catalyzed soot filter coated with the lean NOx trap catalyst according to particular and preferred embodiments of the present invention may be present in an amount ranging anywhere from 0.002 to 0.636 g/L (0.05 to 18 g/ft³) of palladium calculated as the element and based on the volume of the catalyzed soot filter measured from the inlet end up to x% of the substrate axial length, wherein preferably palladium is contained in the portion of the catalyzed soot filter coated with the lean NOx trap catalyst extending from the inlet end to x% of the substrate axial length in an amount in the range of from 0.004 to 0.530 g/L (0.1 to 15 g/ft³), more preferably from 0.018 to 0.424 g/L (0.5 to 12 g/ft³), more preferably from 0.035 to 0.353 g/L (1 to 10 g/ft³), more preferably from 0.106 to 0.283 g/L (3 to 8 g/ft³), more preferably from 0.141 to 0.212 g/L (4 to 6 g/ft³), more preferably from 0.159 to 0.194 g/L (4.5 to 5.5 g/ft³).

Finally, it is further preferred according to the present invention that the lean NOx trap catalyst comprises rhodium. As for the particular and preferred embodiments of the present invention comprising palladium and/or platinum in the lean NOx trap catalyst, there is again no particular restriction as to the amounts in which rhodium may be contained in the portion of the catalyzed soot filter coated with the lean NOx trap catalyst extending from the inlet end to x% of the substrate axial length. Thus, by way of example, rhodium may be contained in the portion of the catalyzed soot filter coated with the lean NOx trap catalyst extending form the inlet end to x% of the substrate axial length in an amount ranging anywhere from 0.002 to 0.636 g/L (0.05 to 18 g/ft³) of rhodium calculated as the element and based on the volume of the catalyzed soot filter measured from the inlet end up to x% of the substrate axial length, wherein preferably, rhodium is contained in the portion of the catalyzed soot filter coated with the lean NOx trap catalyst extending from the inlet end to x% of the substrate axial length in an amount in the range of from 0.004 to 0.530 g/L (0.1 to 15 g/ft³), more preferably from 0.018 to 0.424 g/L (0.5 to 12 g/ft³), more preferably from 0.035 to 0.353 g/L (1 to 10 g/ft³), more preferably from 0.106 to 0.283 g/L (3 to 8 g/ft³), more preferably from 0.141 to 0.212 g/L (4 to 6 g/ft³), more preferably from 0.159 to 0.194 g/L (4.5 to 5.5 g/ft³).

According to the present invention wherein the lean NOx trap catalyst comprises one or more alkaline earth metals and one or more platinum group metals, the one or more alkaline earth metals and the one or more platinum group metals may respectively be provided on the wall flow substrate in any suitable fashion, such that independently from one another the one or more alkaline earth metals and the one or more platinum group metals may be contained directly on the wall flow substrate and/or may be contained in the catalyzed soot filter on a separate support material which is in turn provided on the wall flow substrate. It is, however, preferred according to the present invention that the one or more alkaline earth metals and/or the one or more platinum group metals and preferably the one or more alkaline earth metals and the one or more platinum group metals are supported on a support material and in particular on a particular support material which is in turn supported on the wall flow substrate of the catalyzed soot filter. Thus, according to particular and preferred embodiments of the present invention, it is preferred that the lean NOx trap catalyst comprises the one or more alkaline earth metals and/or, preferably and, the platinum group metals according to any of the preferred embodiments of the present invention on a particulate support material, respectively.

As regards the support which may be employed according to said particular and preferred embodiments, no particular restrictions apply such that any suitable particulate support material may be employed to these ends. Thus, by way of example, the particulate support on which the one or more alkaline earth metals and the one or more platinum group metals are respectively supported may, independently from one another, be selected from the group consisting of alumina, silica, alumina-silica, titania, titania-alumina, zirconia, zirconia-alumina, baria-alumina, ceria, ceria-alumina, baria-ceria-alumina, magnesia, magnesia-alumina, magnesia-ceria-alumina, lanthana-alumina, lanthana-zirconia-alumina, titania-zirconia, and mixtures of two or more thereof, more preferably from the group consisting of alumina, alumina-silica, titania-alumina, zirconia-alumina, baria-alumina, ceria, ceria-alumina, baria-ceria-alumina, magnesia-alumina, magnesia-ceria-alumina, lanthana-alumina, lanthana-zirconia-alumina, and mixtures of two or more thereof, more preferably from the group consisting of alumina, alumina-silica, zirconia-alumina, ceria-alumina, magnesia-ceria-alumina, lanthana-alumina, lanthana-zirconia-alumina, and mixtures of two or more thereof, more preferably from the group consisting of alumina, zirconia-alumina, ceria-alumina, magnesia-ceria-alumina, and mixtures of two or more thereof, wherein more preferably the particulate support material is zirconia-alumina and/or magnesia-ceria-alumina.

According to the present invention it is particularly preferred that the lean NOx trap catalyst comprises both palladium and platinum, wherein said platinum group metals are supported on a particulate support material. According to said preferred embodiments, there is no restriction as to whether platinum and palladium are at least in part or entirely supported on the same particles, or whether platinum and palladium are supported on separate particles of the particulate support material. According to the invention it is however particularly preferred that platinum and palladium are supported on the same particles of the particulate support material, wherein more preferably the particulate support material is selected from the group consisting of alumina, silica, alumina-silica, titania, titania-alumina, zirconia, zirconia-alumina, baria-alumina, ceria, ceria-alumina, baria-ceria-alumina, magnesia, magnesia-alumina, magnesia-ceria-alumina, lanthana-alumina, lanthana-zirconia-alumina, titania-zirconia, and mixtures of two or more thereof, more preferably from the group consisting of alumina, alumina-silica, titania-alumina, zirconia-alumina, baria-alumina, ceria, ceria-alumina, baria-ceria-alumina, magnesia-alumina, magnesia-ceria-alumina, lanthana-alumina, lanthana-zirconia-alumina, and mixtures of two or more thereof, more preferably from the group consisting of alumina, alumina-silica, zirconia-alumina, ceria-alumina, magnesia-ceria-alumina, lanthana-alumina, lanthana-zirconia-alumina, and mixtures of two or more thereof, more preferably from the group consisting of alumina, zirconia-alumina, ceria-alumina, magnesia-ceria-alumina, and mixtures of two or more thereof, wherein more preferably the particulate support material is magnesia-ceria-alumina, wherein preferably the magnesia-ceria-alumina consists of alumina which is doped with magnesia and ceria, wherein more preferably alumina is doped with from 1 to 30 wt.-% of magnesia based on 100 wt.-% of magnesia-ceria-alumina, more preferably from 5 to 25 wt.-% of magnesia, more preferably from 10 to 20 wt.-% of magnesia, more preferably from 12 to 18 wt.-% of magnesia, and more preferably from 14 to 16 wt.-% of magnesia, and independently thereof, with from 0.5 to 25 wt.-% of ceria based on 100 wt.-% of magnesia-ceria-alumina, more preferably from 1 to 20 wt.-% of ma ceria, more preferably from 5 to 15 wt.-% of ceria, more preferably from 7 to 12 wt.-% of ceria, and more preferably from 9 to 11 wt.-% of ceria.

Alternatively to the aforementioned particularly preferred embodiments or in addition thereto, the lean NOx trap catalyst comprises rhodium, wherein rhodium is preferably supported on a particulate support material. As for platinum and palladium, there is no particular restriction as to the type or number of particulate support materials on which rhodium may be supported, wherein it is preferred according to said particular and preferred embodiments of the present invention that rhodium is supported on a particulate support material selected from the group consisting of alumina, silica, alumina-silica, titania, titania-alumina, zirconia, zirconia-alumina, baria-alumina, ceria, ceria-alumina, baria-ceria-alumina, magnesia, magnesia-alumina, magnesia-ceria-alumina, lanthana-alumina, lanthana-zirconia-alumina, titania-zirconia, and mixtures of two or more thereof, more preferably from the group consisting of alumina, alumina-silica, titania-alumina, zirconia-alumina, baria-alumina, ceria, ceria-alumina, baria-ceria-alumina, magnesia-alumina, magnesia-ceria-alumina, lanthana-alumina, lanthana-zirconia-alumina, and mixtures of two or more thereof, more preferably from the group consisting of alumina, alumina-silica, zirconia-alumina, ceria-alumina, magnesia-ceria-alumina, lanthana-alumina, lanthana-zirconia-alumina, and mixtures of two or more thereof, more preferably from the group consisting of alumina, zirconia-alumina, ceria-alumina, magnesia-ceria-alumina, and mixtures of two or more thereof, wherein more preferably the particulate support material is zirconia-alumina, wherein preferably the zirconia-alumina consists of alumina which is doped with zirconia, wherein more preferably alumina is doped with from 1 to 50 wt.-% of zirconia based on 100 wt.-% of zirconia-alumina, more preferably from 5 to 40 wt.-% of zirconia, more preferably from 10 to 30 wt.-% of zirconia, more preferably from 15 to 25 wt.-% of zirconia, and more preferably from 18 to 22 wt.-% of zirconia.

As concerns particularly preferred embodiments of the present invention wherein the lean NOx trap catalyst comprises platinum, palladium, and rhodium, and wherein all of said components are provided on one or more particulate support materials, there is again no particular restriction as to whether one or more of said elements are at least in part or entirely supported on the same particles of one or more particulate support materials or whether two of the three platinum group metals are at least in part or entirely supported on particles of one or more particulate support materials and the third platinum group metal is supported on separate particles of a particulate support material. According to the present invention it is however particularly preferred that the lean NOx trap catalyst comprises platinum, palladium, and rhodium, wherein rhodium is supported on separate particles of the particulate support material than palladium and platinum.

As for the SCR catalyst, no particular restrictions apply relative to the size of the particulate support material onto which the one or more alkaline earth metals and/or the one or more platinum group metals according to any of the preferred and particularly preferred embodiments of the present invention are supported provided that the particles may be provided not only on the surface of the respective inlet and outlet channel walls but also on at least a portion of the surface of the pores within the channel walls underneath the surface of the channel walls. For achieving this, it is preferred that the average particle size D90 of the particulate support material onto which the one or more alkaline earth metals and/or one or more platinum group metals are supported is 25% or less of the average pore size of the walls of the substrate, Thus, by way of example, the average particle size D90 of the particulate support material may range anywhere from 0.5 to 25 µm, wherein preferably the average particle size D9 ranges from 1 to 20 µm, more preferably of from 3 to 15 µm, more preferably of from 6 to 12 µm, and more preferably of from 8 to 10 µm.

According to the present invention there is not particular restriction as to the amounts in which the particulate support material according to any of the particular and preferred embodiments of the present invention may be contained in the lean NOx trap catalyst. Thus, by way of example, the lean NOx trap catalyst may comprise the particulate support material in an amount ranging anywhere of from 3.1 to 305.1 g/L (0.05 to 5 g/in³) based on the volume of the catalyzed soot filter measured from the inlet end up to x% of the substrate axial length, wherein preferably the particulate support material is comprised in the lean NOx trap catalyst in an amount in the range of from 6.1 to 183.1 g/L (0.1 to 3 g/in³), more preferably from 30.5 to 152.6 g/L (0.5 to 2.5 g/in³), more preferably from 61.0 to 122.0 g/L (1 to 2 g/in³), more preferably from 79.3 to 109.8 g/L (1.3 to 1.8 g/in³), and more preferably from 85.4 to 97.6 g/L (1.4 to 1.6 g/in³). According to the present invention it is particularly preferred that the lean NOx trap catalyst comprises the particulate support material in an amount in the range of from 88.5 to 94.6 g/L (1.45 to 1.55 g/in³).

In addition to providing a catalyzed soot filter, the present invention further relates to a method of preparing a catalyzed soot filter and in particular to a method for preparing the inventive catalyzed soot filter according to any of the particular and preferred embodiments thereof as defined in the present application. Therefore, the present invention relates to a method of preparing a catalyzed soot filter and preferably to a method of preparing a catalyzed soot filter according to any of the particular and preferred embodiments of the present application, said method comprising
(i) providing a porous wall flow substrate comprising an inlet end, an outlet end, a substrate axial length extending between the inlet end and the outlet end, and a plurality of channels defined by internal walls of the wall flow substrate, wherein the plurality of channels comprise inlet channels having an open inlet end and a closed outlet end, and outlet channels having a closed inlet end and an open outlet end,
(ii) impregnating a particulate support material with an aqueous solution of a rhodium compound,
(iii) calcining the impregnated particulate support material obtained in (ii) for providing a supported Rh powder,
(iv) mixing a particulate support material with distilled water and subsequently adding an aqueous solution of a palladium compound and of a platinum compound thereto for providing a first slurry,
(v) adding the supported Rh powder, one or more oxygen storage materials, and one or more alkaline earth metal compounds to the first slurry obtained in (iv) for providing a second slurry,
(vi) optionally milling the second slurry, wherein said second slurry displays an average particle size D90 which is 25% or less of the average pore size of the walls of the porous wall flow substrate,
(vii) suspending a solid SCR catalyst in distilled water and optionally milling the resulting mixture for providing a third slurry, wherein said third slurry displays an average particle size D90 which is 25% or less of the average pore size of the walls of the porous wall flow substrate,
(viii) coating a portion of the inlet channel walls of the wall flow substrate by immersing the inlet end of the wall flow substrate into the second slurry up to x% of the substrate axial length extending from the inlet end with 0 < x < 100,
(ix) removing the wall flow substrate from the second slurry and removing excess slurry from the inlet channels, preferably by blowing air through the walls of the outlet channels into the coated inlet channels of the wall flow substrate,
(x) coating a portion of the outlet channel walls of the wall flow substrate by immersing the outlet end of the wall flow substrate into the third slurry up to 100-x% of the substrate axial length extending from the outlet end,
(xi) removing the wall flow substrate from the third slurry and removing excess slurry from the outlet channels, preferably by blowing air through the walls of the inlet channels into the coated outlet channels of the wall flow substrate,
(xii) optionally drying and/or calcining the coated wall flow substrate.

As regards the impregnation of the particulate support material in step (ii), there is no particular restriction according to the present invention as to how said impregnation may be achieved. It is, however, preferred according to the inventive method that the impregnation of the particulate support material (ii) with an aqueous solution of a rhodium compound is achieved by incipient wetness.

The inventive method for preparing a catalyzed soot filter comprises two steps of coating respective portions of the porous wall flow filter substrate as defined in (iiiv) and in (x). Between individual coating steps, and after having completed the coating of the porous wall flow substrate, excess slurry from the individual coating steps is respectively removed in steps (ix) and (xi). Finally, the coated porous wall flow substrate is preferably subject in optional step (xii) to a drying and/or calcining step. However, for ensuring that the individual coatings are sufficiently fixed to the wall flow substrate prior to the application of a further coating, it is preferred according to the inventive method that between steps (ix) and (x) the coated wall flow filter substrate is subject to a step of drying and/or calcining.

As regards the temperature which may be employed in the one or more preferred drying and/or calcining steps employed in the inventive method of preparing a catalyzed soot filter, no particular restrictions apply such that in principle any temperature may be employed for the drying and/or calcining of the coated porous wall flow substrate, respectively. Thus, as regards the drying steps, the individual steps may independently from one another be conducted at a temperature of drying comprised anywhere in the range of from 50 to 200 °C, wherein it is preferred that independently of one another the temperature of drying in the one or more steps of drying is in the range of from 70 to 180 °C, more preferably from 80 to 150 °C, more preferably from 90 to 130 °C, and more preferably from 100 to 120 °C.

Same applies accordingly with respect to the temperature of calcining in the one or more steps of calcining which may range anywhere from 250 to 800 °C, wherein it is preferred according to the inventive method that independently of one another the temperature of calcining in the one or more steps of calcining is in the range of from 300 to 600 °C, more preferably of from 350 to 550 °C, more preferably of from 400 to 500 °C, more preferably of from 430 to 480 °C, and more preferably of from 440 to 460 °C.

With respect to the duration of the one or more calcining steps comprised by the inventive method, again no particular restrictions apply provided that a calcined coated porous wall flow substrate may be obtained. Thus, by way of example, the duration of calcining in the one or more steps of calcining may independently from one another range from 0.1 to 5 h, wherein it is preferred according to the inventive method that independently from one another the duration of calcining in the one or more steps of calcining is in the range of from 0.3 to 3 h, and more preferably of from 0.5 to 2 h, more preferably of from 0.7 to 1.5 h, more preferably of from 0.8 to 1.3 h, and more preferably of from 0.9 to 1.1 h.

As regards the extent to which the respective first and second slurries are provided on the respective inlet and outlet channel walls of the catalyzed soot filter according to the present invention, no particular restrictions apply such that in principle any portion of the inlet channel walls may be coated with the first slurry extending from the inlet end to less than the entire substrate axial length, and accordingly any portion of the outlet channel walls may be provided with the second slurry extending from the outlet end to a length less than the entire substrate axial length, provided that the length of the first slurry provided from the inlet end and the length of the second slurry provided from the outlet end amount to the substrate axial length, *i.e.* 100 % thereof. Thus, by way of example, x may range anywhere from of from 5 to 95, wherein it is preferred that x ranges from 15 to 85, more preferably from 25 to 75, more preferably from 35 to 65, and more preferably from 45 to 55. According to the inventive method it is however alternatively preferred that x ranges from 5 to 65, wherein it is preferred that x ranges from 15 to 55, more preferably from 20 to 45, and more preferably from 25 to 35.

Concerning the rhodium compound which may be employed in step (ii) of the inventive method for impregnating the particulate support material for providing a supported rhodium powder, any conceivable rhodium compound may be employed to this effect, wherein it is preferred that the rhodium compound added as an aqueous solution in step (ii) is rhodium salt, and more preferably a rhodium salt selected from the group consisting of rhodium nitrate, rhodium sulfate, rhodium chloride, rhodium acetate, and mixtures of two or more thereof, wherein more preferably the rhodium salt is rhodium nitrate.

Concerning the palladium compound which may be employed in step (iv) of the inventive method for preparing the first slurry, any conceivable palladium compound may be employed to this effect wherein it is preferred that the palladium compound added as an aqueous solution in step (iv) is a palladium salt, and more preferably a palladium salt selected from the group consisting of palladium nitrate, palladium sulfate, palladium chloride, tetraaminepalladium chloride, and mixtures of two or more thereof, wherein more preferably the palladium salt is palladium nitrate.

Concerning the platinum compound which may be employed in step (iv) of the inventive method for preparing the first slurry, any conceivable platinum compound may be employed to this effect wherein it is preferred that the platinum compound added as an aqueous solution in step (iv) is a platinum salt, and more preferably a platinum salt selected from the group consisting of platinum nitrate, platinum sulfate, platinum chloride, platinum tetra monoethanolamine hydroxide, and mixtures of two or more thereof, wherein more preferably the platinum salt is palladium platinum tetra monoethanolamine hydroxide.

Regarding the porous wall flow substrate which may be employed in step (i) of the inventive method, no particular restrictions apply as to its shape and dimensions nor with respect to the material with which it is made. According to the present invention, it is, however, preferred that the porous wall flow substrate is a honeycomb substrate with alternately plugged inlet and outlet ends such that each wall of the wall flow substrate respectively has a first surface which is a surface of an inlet channel and a second surface which is a surface of an outlet channel.

Same applies accordingly relative to the porosity of the walls of the wall flow substrate which may be employed in step (i) of the inventive method such that said porosity may range anywhere from 40 to 85 %, and preferably ranges from 45 to 80 %, more preferably from 50 to 75 %, more preferably from 55 to 70 %, and more preferably in the range of from 60 to 65 %. As regards the porosity as defined in the present application, it is preferred that said porosity is obtained via the mercury intrusion method, more preferably according to ISO 15901-1:2005.

As regards the average pore size of the walls of the wall flow substrate which may be employed in the inventive method in step (i), again no particular restrictions apply such that wall flow substrates displaying any suitable average pore size may be employed. Thus, by way of example, the average pore size of the walls of the substrate may be in the range of from 5 to 50 µm, and preferably in the range of from 10 to 40 µm, more preferably from 13 to 35 µm, more preferably from 15 to 30 µm, more preferably from 17 to 25 µm, and more preferably from 18 to 22 µm. As for the porosity, it is noted that the average pore size of the walls of the substrate the uncoated wall flow substrate, *i.e.* prior to providing the SCR catalyst and the palladium and platinum components thereon. Furthermore, as for the porosity of the substrate, also the average pore size of the walls as defined in the present application preferably refers to the average pore size as determined by mercury porosimetry, and more preferably obtained according to ISO 15901-1:2005.

As noted above, there is no particular restriction relative to the material of which the wall flow substrate provided in step (i) consists such that by way of example it may comprise one or more selected from the group consisting of metals, metal oxides, and ceramic materials, wherein preferably the material of which the wall flow filter consists comprises one or more selected from the group consisting of cordierite, aluminum titanate, silicon carbide, mullite, and mixtures of two or more thereof, wherein more preferably the wall flow substrate is made of cordierite, aluminum titanate, or silicon carbide, and preferably of silicon carbide.

As regards the solid SCR catalyst used in the method according to the present invention, no particular restriction applies relative to the materials contained therein provided that the selective catalytic reduction of NOx to N₂ via reduction with ammonia may be catalyzed by said material. Thus, any suitable SCR-active material may be comprised in the solid SCR catalyst. According to the present invention it is however preferred that the solid SCR catalyst comprises one or more zeolites, and more preferably one or more zeolites having a structure type selected from the group consisting of BEA, CHA, FAU, FER, HEU, LEV, MEI, MEL, MFI, MOR, including mixed structures and combinations of two or more thereof, more preferably from the group consisting of BEA, CHA, LEV, MFI, including mixed structures and combinations of two or more thereof, wherein more preferably the one or more zeolites are of the BEA and/or CHA structure type, preferably of the CHA structure type, wherein more preferably the one or more zeolites comprise chabazite, the one or more zeolites preferably being chabazite.

According to the present invention it is yet further preferred that the one or more zeolites comprised by the solid SCR catalyst used in (vii) according to any of the particular and preferred embodiments of the inventive method contain one or more transition metals. As regards the one or more transition metals preferably contained in the one or more zeolites preferably comprised by the solid SCR catalyst, no particular restrictions apply such that in principle any conceivable transition metal may be contained therein. It is, however, preferred according to the present invention that the one or more zeolites contain one or more transition metals selected from the group consisting of Pt, Pd, Rh, Cu, Co, Cr, Ni, Fe, V, Nb, and combinations of two or more thereof, more preferably one or more transition metals selected from the group consisting of Cu, Co, Cr, Ni, Fe, and combinations of two or more thereof, wherein more preferably the one or more zeolites contain Cu and/or Fe, preferably Cu.

Regarding the particular and preferred embodiments of the inventive method wherein the one or more zeolites preferably comprised in the solid SCR catalyst of the catalyzed soot filter contain one or more transition metals, there is no particular restriction as to the state in which the respective transition metals are contained in the one or more zeolites and in particular the method according to which the one or more transition metals are introduced into the zeolite. It is however preferred according to the present invention that the one or more transition metals contained in the one or more zeolites preferably comprised in the solid SCR catalyst have been introduced into the zeolite by ion-exchange and/or by impregnation, wherein it is particularly preferred that the one or more transition metals have been introduced therein by ion-exchange.

As regards the amount in which the one or more preferred zeolites optionally containing one or more transition metals are coated onto the wall flow substrate, no particular restriction applies such that these may be coated thereon in any suitable amount. Thus, by way of example, in steps (x) and (xi) the one or more zeolites optionally containing one or more transition metals may be coated onto the wall flow substrate in an amount ranging anywhere from 3.1 to 366.1 g/L (0.05 to 6 g/in³) calculated as the total weight of the one or more zeolites, optionally containing one or more transition metals, in the calcined state and based on the total volume of the catalyzed soot filter measured from the outlet end up to 100-x % of the substrate axial length, preferably from 6.1 to 305.1 g/L (0.1 to 5 g/in³). It is, however, preferred according to the present invention that the one or more zeolites optionally containing one or more transition are coated onto the wall flow substrate in an amount in the range of from 30.5 to 244.1 g/L (0.5 to 4 g/in³), more preferably from 48.8 to 183.1 g/L (0.8 to 3 g/in³), more preferably from 61.0 to 152.6 g/L (1 to 2.5 g/in³), and more preferably from 79.3 to 122.0 g/L (1.3 to 2 g/in³). According to the present invention it is particularly preferred that in steps (x) and (xi) the one or more preferred zeolites optionally containing one or more transition metals are coated onto the wall flow substrate in an amount in the range of from 91.5 to 115.9 g/L (1.5 to 1.9 g/in³).

Concerning the size of the particles of the solid SCR catalyst which is contained in the third slurry obtained in step (vii) no particular restrictions apply provided that the particles may be coated in (x) and (xi) not only on the surface of the inlet channel walls but also on at least a portion of the surface of the pores within the channel walls underneath the surface of the channel walls. For achieving this, it is preferred that the average particle size D90 of the solid SCR catalyst is 25 % or less of the average pore size of the walls of the substrate. Thus, by way of example, the average particle size D90 of the solid SCR catalyst may range anywhere from 0.5 to 20 µm, wherein more preferably the average particle size D90 ranges from 1 to 15 µm, more preferably of from 3 to 10 µm, more preferably of from 4 to 8 µm, and more preferably of from 5 to 7 µm.

According to the present invention, there is no particular restriction as to the amounts of rhodium, palladium, or of platinum which may be coated onto the wall flow substrate in (viii) and (ix). Thus, as concerns rhodium, it may be coated onto the wall flow substrate in (viii) and (ix) from the inlet to x % of the substrate axial length in an amount ranging anywhere from 0.017 to 0.706 g/L (0,5 to 20 g/ft³) of rhodium calculated as the element and based on the volume of the catalyzed soot filter measured from the inlet end up to x % of the substrate axial length. According to the present invention it is however preferred that rhodium is coated onto the wall flow substrate extending from the inlet end to x % of the substrate axial length in an amount in the range of from 1 to 15 g/ft³0.035 to 0.530 g/L (1 to 15 g/ft³), and more preferably from 0.071 to 0.353 g/L (2 to 10 g/ft³), more preferably from 0.088 to 0.283 g/L (2.5 to 8 g/ft³), more preferably from 0.106 to 0.247 g/L (3 to 7 g/ft³), more preferably from 0.124 to 0.230 g/L (3.5 to 6.5 g/ft³), more preferably from 0.141 to 0.212 g/L (4 to 6 g/ft³), and more preferably from 0.159 to 0.194 g/L

(4.5 to 5.5 g/ft³). As concerns palladium, it may be coated onto the wall flow substrate in (viii) and (ix) from the inlet to x % of the substrate axial length in an amount ranging anywhere from 0.017 to 0.706 g/L (0,5 to 20 g/ft³) of palladium calculated as the element and based on the volume of the catalyzed soot filter measured from the inlet end up to x % of the substrate axial length. According to the present invention it is however preferred that palladium is coated onto the wall flow substrate extending from the inlet end to x % of the substrate axial length in an amount in the range of from 0.035 to 0.530 g/L (1 to 15 g/ft³), and more preferably from 0.071 to 0.353 g/L (2 to 10 g/ft³), more preferably from 0.088 to 0.283 g/L (2.5 to 8 g/ft³), more preferably from 0.106 to 0.247 g/L (3 to 7 g/ft³), more preferably from 0.124 to 0.230 g/L (3.5 to 6.5 g/ft³), more preferably from 0.141 to 0.212 g/L (4 to 6 g/ft³), and more preferably from 0.159 to 0.194 g/L (4.5 to 5.5 g/ft³).

Same applies accordingly relative to the amount of platinum such that it may for example be coated onto the wall flow substrate in steps (viii) and (ix) extending from the inlet end up to x% of the substrate axial length in an amount in the range of from 0.018 to 6.36 g/L (0.5 to 180 g/ft³) of platinum calculated as the element and based on the volume of the catalyzed soot filter measured from the inlet end up to x% of the substrate axial length. According to the present invention it is preferred that platinum is coated onto the wall flow substrate in steps (viii) and (ix) extending from the inlet end up to x% of the substrate axial length in an amount in the range of from 0.035 to 4.94 g/L (1 to 140 g/ft³), more preferably from 0.177 to 3.88 g/L (5 to 110 g/ft³), more preferably from 0.353 to 3.18 g/L (10 to 90 g/ft³), more preferably from 1.06 to 2.47 g/L (30 to 70 g/ft³), more preferably from 1.41 to 2.12 g/L (40 to 60 g/ft³), more preferably from 1.77 to 1.94 g/L (50 to 55 g/ft³).

As regards the particulate support material which may be employed in step (ii) for supporting rhodium, no particular restrictions apply such that any suitable particulate support material may be employed to this end. Thus, by way of example, the particulate support material onto which rhodium is supported may be selected from the group consisting of alumina, silica, alumina-silica, titania, titania-alumina, zirconia, zirconia-alumina, baria-alumina, ceria, ceria-alumina, baria-ceria-alumina, magnesia, magnesia-alumina, magnesia-ceria-alumina, lanthana-alumina, lanthana-zirconia-alumina, titania-zirconia, and mixtures of two or more thereof, more preferably from the group consisting of alumina, alumina-silica, titania-alumina, zirconia-alumina, baria-alumina, ceria, ceria-alumina, baria-ceria-alumina, magnesia-alumina, magnesia-ceria-alumina, lanthana-alumina, lanthana-zirconia-alumina, and mixtures of two or more thereof, more preferably from the group consisting of alumina, alumina-silica, zirconia-alumina, ceria-alumina, magnesia-ceria-alumina, lanthana-alumina, lanthana-zirconia-alumina, and mixtures of two or more thereof, more preferably from the group consisting of alumina, zirconia-alumina, ceria-alumina, magnesia-ceria-alumina, and mixtures of two or more thereof, wherein more preferably the particulate support material is zirconia-alumina, wherein preferably the zirconia-alumina consists of alumina which is doped with zirconia, wherein more preferably alumina is doped with from 1 to 50 wt.-% of zirconia based on 100 wt.-% of zirconia-alumina, more preferably from 5 to 40 wt.-% of zirconia, more preferably from 10 to 30 wt.-% of zirconia, more preferably from 15 to 25 wt.-% of zirconia, and more preferably from 18 to 22 wt.-% of zirconia.

Concerning the particulate support material which may be employed in step (iv) for supporting palladium and platinum, again, no particular restrictions apply such that any suitable particulate support material may be employed to this end. Thus, by way of example, the particulate support material onto which palladium and platinum are supported may be selected from the group consisting of alumina, silica, alumina-silica, titania, titania-alumina, zirconia, zirconia-alumina, baria-alumina, ceria, ceria-alumina, baria-ceria-alumina, magnesia, magnesia-alumina, magnesia-ceria-alumina, lanthana-alumina, lanthana-zirconia-alumina, titania-zirconia, and mixtures of two or more thereof, more preferably from the group consisting of alumina, alumina-silica, titania-alumina, zirconia-alumina, baria-alumina, ceria, ceria-alumina, baria-ceria-alumina, magnesia-alumina, magnesia-ceria-alumina, lanthana-alumina, lanthana-zirconia-alumina, and mixtures of two or more thereof, more preferably from the group consisting of alumina, alumina-silica, zirconia-alumina, ceria-alumina, magnesia-ceria-alumina, lanthana-alumina, lanthana-zirconia-alumina, and mixtures of two or more thereof, more preferably from the group consisting of alumina, zirconia-alumina, ceria-alumina, magnesia-ceria-alumina, and mixtures of two or more thereof, wherein more preferably the particulate support material is magnesia-ceria-alumina, wherein preferably the magnesia-ceria-alumina consists of alumina which is doped with magnesia and ceria, wherein more preferably alumina is doped with from 1 to 30 wt.-% of magnesia based on 100 wt.-% of magnesia-ceria-alumina, more preferably from 5 to 25 wt.-% of magnesia, more preferably from 10 to 20 wt.-% of magnesia, more preferably from 12 to 18 wt.-% of magnesia, and more preferably from 14 to 16 wt.-% of magnesia, and independently thereof, with from 0.5 to 25 wt.-% of ceria based on 100 wt.-% of magnesia-ceria-alumina, more preferably from 1 to 20 wt.-% of ma ceria, more preferably from 5 to 15 wt.-% of ceria, more preferably from 7 to 12 wt.-% of ceria, and more preferably from 9 to 11 wt.-% of ceria.

As for SCR catalyst, no particular restrictions apply relative to the size of the particulate support material onto which rhodium is supported in step (ii) and palladium and platinum are supported in step (iv) provided that the particles may respectively be coated in steps (viii) and (ix) not only on the surface of the inlet channel walls but also on at least a portion of the surface of the pores within the channel walls underneath the surface of the channel walls. For achieving this, it is preferred that the average particle size D90 of the particulate support material of steps (ii) and (iv) onto which rhodium and platinum and palladium are respectively supported is 25% or less of the average pore size of the walls of the substrate. Thus, by way of example, the average particle size D90 of the respective particulate support material may range anywhere from 0.5 to 25 µm, wherein preferably the average particle size D90 ranges from 1 to 20 µm, more preferably of from 3 to 15 µm, more preferably of from 6 to 12 µm, and more preferably of from 8 to 10 µm.

According to the present invention, there is no particular restriction as to the amounts in which in steps (viii) and (ix) the particulate support material according to any of the particular and preferred embodiments of the inventive method may be coated onto the wall flow substrate. Thus, by way of example, the particulate support material may be coated onto the wall flow substrate in steps (viii) and (ix) in an amount ranging anywhere from 3.1 to 305.1 g/L (0.05 to 5 g/in³) based on the volume of the catalyzed soot filter measured from the inlet end up to x% of the substrate axial length, wherein preferably the particulate support material is coated in steps (viii) and (ix) in an amount in the range of from 6.1 to 183.1 g/L (0.1 to 3 g/in³), more preferably from 30.5 to 152.6 g/L (0.5 to 2.5 g/in³), more preferably from 61.0 to 122.0 g/L (1 to 2 g/in³), more preferably from 79.3 to 109.8 g/L (1.3 to 1.8 g/in³), more preferably from 85.4 to 97.6 g/L (1.4 to 1.6 g/in³), more preferably from 88.5 to 94.6 g/L (1.45 to 1.55 g/in³).

Same applies accordingly relative to the amount in which the solid SCR catalyst may be coated onto the wall flow substrate in steps (x) and (xi), wherein again no particular restrictions apply such that any suitable amount may be provided thereon. Thus, by way of example, the solid SCR catalyst may be coated onto the wall flow substrate in steps (x) and (xi) in an amount in the range of from 3.1 to 366.1 g/L (0.05 to 6 g/in³) based on the volume of the catalyzed soot filter measured from the outlet end up to 100-x % of the substrate axial length. According to the present invention, it is however preferred that in steps (x) and (xi) the solid SCR catalyst is coated onto the wall flow substrate in an amount in the range of from 6.1 to 305.1 g/L (0.1 to 5 g/in³), more preferably from 30.5 to 244.1 g/L (0.5 to 4 g/in³), more preferably from 48.8 to 183.1 g/L (0.8 to 3 g/in³), more preferably from 61.0 to 152.6 g/L (1 to 2.5 g/in³), more preferably from 79.3 to 122.0 g/L (1.3 to 2 g/in³), and more preferably from 91.5 to 115.9 g/L (1.5 to 1.9 g/in³).

Besides providing a catalyzed soot filter according to any of the aforementioned particular and preferred embodiments described in the present application, the present application further relates to a catalyzed soot filter obtained and/or obtainable by the inventive method for preparing a catalyzed soot filter according to any of the particular and preferred embodiments thereof as defined in the present application. In particular, the present invention does not only relate to a catalyzed soot filter as may be directly obtained by the inventive method according to any particular and preferred embodiments thereof, *i.e.* the direct product thereof, but also to any catalyzed soot filter as may be obtained, *i.e.* as is obtainable according to the inventive method as defined in any of the particular and preferred embodiments thereof irrespective of the actual method according to which the catalyzed soot filter is obtained, provided that it may be obtained by the inventive method according to any of the particular and preferred embodiments thereof.

Furthermore, according to the present invention, the catalyzed soot filter according to any of the particular and preferred embodiments thereof as defined in the foregoing may be employed as such or in combination with one or more further catalytic and/or non-catalytic components in particular in an exhaust gas line or the like. Thus, the present invention further relates to an emissions treatment system wherein the inventive catalyzed soot filter according to any of the particular and preferred embodiments of the present invention is contained in said emissions treatment system.

Therefore, the present invention also relates to an emissions treatment system comprising a catalyzed soot filter (CSF) according to any of the particular and preferred embodiments as described in the present application or as obtainable and/or obtained according to any of the particular and preferred embodiments of the inventive method for the and a lean NOx trap (LNT) located upstream of the CSF, wherein the LNT and the CSF are in fluid communication with one another such that exhaust gas from an internal combustion engine may flow through the LNT and subsequently through the CSF, wherein the LNT comprises a flow through substrate comprising an inlet end, an outlet end, a substrate axial length extending between the inlet end and the outlet end, and a plurality of channels defined by internal walls of the wall flow substrate, and wherein the flow through substrate is coated with a second LNT catalyst. For sake of completeness it is herewith indicated that the term "second" for the lean NOx trap (LNT) catalyst contained in the LNT of the emissions treatments system serves to distinguish it from the lean NOx trap (LNT) catalyst contained in the catalyzed soot filter. Accordingly the lean NOx trap catalyst contained in the catalyzed soot filter according to any of the particular and preferred embodiments of the present invention may also be considered to constitute the "first" lean NOx trap catalyst when considered in combination with the LNT in the emissions treatment system according to any of the particular and preferred embodiments of the present invention. Consequently, unless specified as the second lean NOx trap catalyst or otherwise, the term "lean NOx trap catalyst" or "LNT catalyst" within the meaning of the present application is synonymous with a "first lean NOx trap" or "first LNT catalyst", in particular when employed in the context of the emissions treatment system according to any of the particular and preferred embodiments of the present invention.

There is no particular restriction according to the present invention relative to the components which may be contained in the second lean NOx trap catalyst, provided that these are suitable for trapping NOx contained in exhaust gas as NO and/or NO₂ and preferably as NO, or do not impede the storage of NOx by other components contained in the second lean NOx trap catalyst. According to the present invention it is preferred that the second lean NOx trap catalyst comprises one or more alkaline earth metals and preferably one or more alkaline earth metals selected from the group consisting of Mg, Ca, Ba, Sr, and combinations of two or more thereof. According to the present invention it is yet further preferred that the second lean NOx trap catalyst comprises one or more alkaline earth metals selected from the group consisting of Mg, Ca, Ba, and combinations of two or more thereof, wherein even more preferably Mg and/or Ba, and preferably Mg and Ba are contained as the alkaline earth metal in the second lean NOx trap catalyst according to particular and preferred embodiments of the present invention. As regards the form in which the alkaline earth metals may be contained in the second lean NOx trap catalyst, no particular restrictions apply, wherein preferably the one or more alkaline earth metals according to the particular and preferred embodiments of the present invention are contained in the oxide form in the second lean NOx trap catalyst.

According to the present invention, there is no particular restriction as to the amounts of the one or more alkaline earth metals which are preferably contained in the second lean NOx trap catalyst. Thus, the one or more alkaline earth metals according to any of the particular and preferred embodiments of the present invention may be contained in the second lean NOx trap catalyst in an amount ranging anywhere from 3.1 to 122.0 g/L (0.05 to 2 g/in³) of the one or more alkaline earth metals calculated as the element and based on the total volume of the LNT. According to the present invention it is however preferred that the one or more alkaline earth metals are contained in the second lean NOx trap catalyst in an amount in the range of from 6.1 to 91.5 g/L (0.1 to 1.5 g/in³), and more preferably from 12.2 to 61.0 g/L (0.2 to 1 g/in³), more preferably from 15.3 to 42.7 g/L (0.25 to 0.7 g/in³), more preferably from 18.3 to 30.5 g/L (0.3 to 0.5 g/in³), more preferably from 21.4 to 27.5 g/L (0.35 to 0.45 g/in³), more preferably from 22.6 to 25.6 g/L (0.37 to 0.42 g/in³), and more preferably from 23.8 to 24.4 g/L (0.39 to 0.4 g/in³). It is again noted that within the meaning of the present application, the amounts of materials in the catalyzed soot filter and other catalyzed monoliths expressed in g/in³ or g/ft³ reflect the loading of material in question in grams of the (catalytic) component volume of the monolith. To this effect, the monolith or honeycomb volume is calculated based on its cross-sectional area and length.

As regards the further components which may be contained in the second lean NOx trap catalyst in addition to the one or more components suitable for trapping NOx and preferably in addition to the one or more alkaline earth metals according to any of the particular and preferred embodiments of the present invention, no restrictions apply such that any conceivable one or more further components may be contained therein. According to the present invention it is however preferred that the second lean NOx trap catalyst comprises one or more platinum group metals, and more preferably one or more platinum group metals selected from the group consisting of platinum, palladium, rhodium, iridium, and combinations of two or more thereof. More preferably, the second lean NOx trap catalyst comprises one or more platinum group metals selected from the group consisting of platinum, palladium, rhodium, and combinations of two or more thereof, wherein more preferably, the second lean NOx trap catalyst comprises platinum and more preferably platinum and palladium, wherein even more preferably platinum, palladium, and rhodium are contained as the platinum group metals in the second lean NOx trap catalyst according to any of the particular and preferred embodiments of the present invention.

As regards the particular and preferred embodiments of the present invention wherein one or more platinum group metals are contained in the second lean NOx trap catalyst, no particular restrictions apply provided that the lean NOx trap catalyst may effectively trap NOx contained in exhaust gas. Thus, by way of example, the one or more platinum group metals contained in the second NOx trap catalyst may be contained therein in an amount ranging anywhere from 0.035 to 7.06 g/L (1 to 200 g/ft³) of the one or more platinum group metals calculated as the element and based on the total volume of the LNT. It is, however, preferred according to the present invention that the one or more platinum group metals are contained in the second lean NOx trap catalyst in an amount in the range of from 0.353 to 14.13 g/L (10 to 400 g/ft³) of the one or more platinum group metals calculated as the element and based on the total volume of the LNT, wherein more preferably the one or more platinum group metals are contained in the second lean NOx trap catalyst in an amount in the range of from 1.06 to 10.59 g/L (30 to 300 g/ft³), more preferably from 1.77 to 8.83 g/L (50 to 250 g/ft³), more preferably from 2.83 to 7.77 g/L (80 to 220 g/ft³), more preferably from 3.53 to 7.06 g/L (100 to 200 g/ft³), more preferably from 4.59 to 6.36 g/L (130 to 180 g/ft³), more preferably from 4.94 to 5.65 g/L (140 to 160 g/ft³), and more preferably from 5.12 to 5.47 g/L (145 to 155 g/ft³).

According to the present invention, it is particularly preferred that the second lean NOx trap catalyst comprises platinum. According to said preferred embodiments, there is again no particular restriction according to the present invention as to the amounts in platinum which may be contained in the second lean NOx trap catalyst. Thus, by way of example, platinum may be contained in second lean NOx trap catalyst in an amount ranging anywhere from 0.177 to 14.126 g/L (5 to 400 g/ft³) of platinum calculated as the element and based on the total volume of the LNT, wherein it is preferred that platinum is contained in the portion of the catalyzed soot filter coated with the lean NOx trap catalyst in an amount in the range of from 0.353 to 10.59 g/L (10 to 300 g/ft³), more preferably from 1.06 to 8.83 g/L (30 to 250 g/ft³), more preferably from 1.77 to 7.06 g/L (50 to 200 g/ft³), more preferably from 2.83 to 6.36 g/L (80 to 180 g/ft³), more preferably from 3.53 to 5.30 g/L (100 to 150 g/ft³), more preferably from 4.24 to 4.59 g/L (120 to 130 g/ft³), and more preferably from 4.41 to 4.77 g/L (125 to 135 g/ft³).

According to the present invention it is further preferred that the second lean NOx trap catalyst comprises palladium. As for the particular and preferred embodiments of the present invention comprising platinum in the lean NOx trap catalyst, there is again no particular restriction as to the amount in which palladium may be contained in the second lean NOx trap catalyst. Thus, by way of example, palladium contained in the second lean NOx trap catalyst according to particular and preferred embodiments of the present invention may be present in an amount ranging anywhere from 0.035 to 1.77 g/L (1 to 50 g/ft³) of palladium calculated as the element and based on the total volume of the LNT, wherein preferably palladium is contained in the second lean NOx trap catalyst in an amount in the range of from 0.106 to 1.41 g/L (3 to 40 g/ft³), more preferably from 0.177 to 1.06 g/L (5 to 30 g/ft³), more preferably from 0.283 to 0.883 g/L (8 to 25 g/ft³), more preferably from 0.353 to 0.706 g/L (10 to 20 g/ft³), more preferably from 0.424 to 0.636 g/L (12 to 18 g/ft³), and more preferably from 0.494 to 0.565 g/L (14 to 16 g/ft³).

Finally, it is further preferred according to the present invention that the second lean NOx trap catalyst comprises rhodium. As for the particular and preferred embodiments of the present invention comprising palladium and/or platinum in the second lean NOx trap catalyst, there is again no particular restriction as to the amounts in which rhodium may be contained in the second lean NOx trap catalyst. Thus, by way of example, rhodium may be contained in the second lean NOx trap catalyst in an amount ranging anywhere from 0.004 to 0.706 g/L (0.1 to 20 g/ft³) of rhodium calculated as the element and based on the total volume of the LNT, wherein preferably, rhodium is contained in the second lean NOx trap catalyst in an amount in the range of from 0.018 to 0.530 g/L (0.5 to 15 g/ft³), more preferably from 0.035 to 0.353 g/L (1 to 10 g/ft³), more preferably from 0.106 to 0.283 g/L (3 to 8 g/ft³), more preferably from 0.141 to 0.212 g/L (4 to 6 g/ft³), more preferably from 0.159 to 0.194 g/L (4.5 to 5.5 g/ft³).

According to particular and preferred embodiments of the present invention wherein the second lean NOx trap catalyst comprises one or more alkaline earth metals and/or one or more platinum group metals, the one or more alkaline earth metals and the one or more platinum group metals may respectively be provided on the flow through substrate in any suitable fashion, such that independently from one another the one or more alkaline earth metals and the one or more platinum group metals may be contained directly on the flow through substrate and/or may be contained in the LNT on a separate support material which is in turn provided on the flow through substrate. It is, however, preferred according to the present invention that the one or more alkaline earth metals and/or the one or more platinum group metals and preferably the one or more alkaline earth metals and the one or more platinum group metals are supported on a support material and in particular on a particular support material which is in turn supported on the flow through substrate of the LNT. Thus, according to particular and preferred embodiments of the present invention, it is preferred that the second lean NOx trap catalyst comprises the one or more alkaline earth metals and/or, preferably and, the platinum group metals according to any of the preferred embodiments of the present invention on a particulate support material, respectively. As regards the support which may be employed according to said particular and preferred embodiments, no particular restrictions apply such that any suitable particulate support material may be employed to these ends. Thus, by way of example, the particulate support on which the one or more alkaline earth metals and the one or more platinum group metals are respectively supported may, independently from one another, be selected from the group consisting of alumina, silica, alumina-silica, titania, titania-alumina, zirconia, zirconia-alumina, baria-alumina, ceria, ceria-alumina, baria-ceria-alumina, magnesia, magnesia-alumina, magnesia-ceria-alumina, lanthana-alumina, lanthana-zirconia-alumina, titania-zirconia, and mixtures of two or more thereof, more preferably from the group consisting of alumina, alumina-silica, titania-alumina, zirconia-alumina, baria-alumina, ceria, ceria-alumina, baria-ceria-alumina, lanthana-alumina, lanthana-zirconia-alumina, and mixtures of two or more thereof, more preferably from the group consisting of alumina, alumina-silica, zirconia-alumina, ceria, ceria-alumina, lanthana-alumina, lanthana-zirconia-alumina, and mixtures of two or more thereof, more preferably from the group consisting of alumina, ceria, ceria-alumina, and mixtures of two or more thereof, wherein more preferably the particulate support material is alumina and/or ceria, preferably γ-alumina.

According to the present invention it is particularly preferred that the second lean NOx trap catalyst comprises both palladium and platinum, wherein said platinum group metals are supported on a particulate support material. According to said preferred embodiments, there is no restriction as to whether platinum and palladium are at least in part or entirely supported on the same particles, or whether platinum and palladium are supported on separate particles of the particulate support material. According to the invention it is however particularly preferred that platinum and palladium are supported on the same particles of the particulate support material, wherein more preferably the particulate support material is selected from the group consisting of alumina, silica, alumina-silica, titania, titania-alumina, zirconia, zirconia-alumina, baria-alumina, ceria, ceria-alumina, baria-ceria-alumina, lanthana-alumina, lanthana-zirconia-alumina, titania-zirconia, and mixtures of two or more thereof, more preferably from the group consisting of alumina, alumina-silica, titania-alumina, zirconia-alumina, baria-alumina, ceria-alumina, baria-ceria-alumina, lanthana-alumina, lanthana-zirconia-alumina, and mixtures of two or more thereof, more preferably from the group consisting of alumina, alumina-silica, zirconia-alumina, lanthana-alumina, lanthana-zirconia-alumina, and mixtures of two or more thereof, wherein more preferably the particulate support material is alumina, preferably γ-alumina.

Alternatively to the aforementioned particularly preferred embodiments or in addition thereto, the second lean NOx trap catalyst comprises rhodium, wherein rhodium is preferably supported on a particulate support material. As for platinum and palladium, there is no particular restriction as to the type or number of particulate support materials on which rhodium may be supported, wherein it is preferred according to said particular and preferred embodiments of the present invention that rhodium is supported on a particulate support material selected from the group consisting of alumina, silica, alumina-silica, titania, titania-alumina, zirconia, zirconia-alumina, baria-alumina, ceria, ceria-alumina, baria-ceria-alumina, lanthana-alumina, lanthana-zirconia-alumina, titania-zirconia, and mixtures of two or more thereof, more preferably from the group consisting of alumina, alumina-silica, zirconia-alumina, ceria, ceria-alumina, lanthana-alumina, lanthana-zirconia-alumina, and mixtures of two or more thereof, wherein more preferably the particulate support material is ceria and/or ceria-alumina, preferably ceria.

As concerns particularly preferred embodiments of the present invention wherein the second lean NOx trap catalyst comprises platinum, palladium, and rhodium, and wherein all of said components are provided on one or more particulate support materials, there is again no particular restriction as to whether one or more of said elements are at least in part or entirely supported on the same particles of one or more particulate support materials or whether two of the three platinum group metals are at least in part or entirely supported on particles of one or more particulate support materials and the third platinum group metal is supported on separate particles of a particulate support material. According to the present invention it is however particularly preferred that the second lean NOx trap catalyst comprises platinum, palladium, and rhodium, wherein rhodium is supported on separate particles of the particulate support material than palladium and platinum.

According to the present invention, no particular restrictions apply relative to the size of the particulate support material onto which the one or more alkaline earth metals and/or the one or more platinum group metals according to any of the preferred and particularly preferred embodiments of the LNT of the emissions treatment system according to the present invention are supported. Thus, by way of example, the average particle size D90 of the particulate support material may range anywhere from 0.5 to 25 µm, wherein preferably the average particle size D9 ranges from 1 to 20 µm, more preferably of from 3 to 15 µm, more preferably of from 6 to 12 µm, and more preferably of from 8 to 10 µm.

According to the present invention there is not particular restriction as to the amounts in which the particulate support material according to any of the particular and preferred embodiments of the present invention may be contained in the second lean NOx trap catalyst. Thus, by way of example, the second lean NOx trap catalyst may comprise the particulate support material in an amount ranging anywhere of from 30.5 to 1220.5 g/L (0.5 to 20 g/in³) based on the total volume of the LNT, wherein preferably the particulate support material is comprised in the second lean NOx trap catalyst in an amount in the range of from 61.0 to 915.4 g/L (1 to 15 g/in³), more preferably from 122.0 to 610.2 g/L (2 to 10 g/in³), more preferably from 183.1 to 488.2 g/L (3 to 8 g/in³), more preferably from 213.6 to 366.1 g/L (3.5 to 6 g/in³), more preferably from 244.1 to 335.6 g/L (4 to 5.5 g/in³), more preferably from 262.4 to 317.3 g/L (4.3 to 5.2 g/in³), more preferably from 274.6 to 305.1 g/L (4.5 to 5 g/in³), more preferably from 286.8 to 299.0 g/L (4.7 to 4.9 g/in³), and more preferably from 289.9 to 296.0 g/L (4.75 to 4.85 g/in³).

According to the present invention it is preferred that the emissions treatment system further comprises a diesel oxidation catalyst located upstream of the LNT, wherein the LNT is in fluid communication with the diesel oxidation catalyst such that exhaust gas from the combustion engine may flow through the diesel oxidation catalyst and subsequently through the LNT. Although the inventive catalyzed soot filter is highly effective in the emissions treatment system utilizing passive SCR, it is not excluded that the emissions treatment system according to any of the particular and preferred embodiments of the present invention may further comprise a means of injecting a source of ammonia and/or one or more hydrocarbons into the exhaust gas stream from an internal combustion engine alternatively to the emissions treatment system wherein ammonia is generated *in situ* and/or in support of the passive SCR system depending on the specific needs for achieving NOx conversion at a particular point in time. Thus, it is preferred according to the present invention that the emissions treatment system further comprises a means of injecting a source of ammonia and/or one or more hydrocarbons into the exhaust gas stream from the internal combustion engine, wherein said injection means is located down-stream of the LNT and upstream of the CSF.

Finally, it is preferred according the present invention that the emissions treatment system according to any of the particular and preferred embodiments thereof as defined in the foregoing further comprises an internal combustion engine, and preferably a lean burn internal combustion engine, wherein more preferably the internal combustion engine is a diesel engine.

Furthermore, the present invention also relates to a process for the treatment of emissions from an internal combustion engine comprising directing exhaust gas from an internal combustion engine through the inlet channel of a catalyzed soot filter according to any of the particular and preferred embodiments thereof as defined in the present application or by directing exhaust gas from an internal combustion engine through an emissions treatment system according to any of the particular and preferred embodiments thereof as defined in the present application.

Finally, the present invention relates to the use of a catalyzed soot filter according to any of the particular and preferred embodiments of the present invention as described in the present application including a catalyzed soot filter as obtained and/or obtainable according to any one of the particular and preferred embodiments of the inventive process as described in the present application. In addition, the present invention relates to the use of an emissions treatments system according to any of the particular and preferred embodiments of the present invention as described in the present application. With respect to the inventive use, there is no restriction whatsoever relative to the application in which the aforementioned catalyzed soot filter or emissions treatment system may be employed wherein independently from one another the catalyzed soot filter or the emissions treatment system may be used for the treatment of exhaust gas emissions, and preferably for the simultaneous treatment of NOₓ, hydrocarbons, and carbon monoxide in exhaust gas from an internal combustion engine, more preferably for the storage and conversion of NOx and/or for the selective catalytic reduction of NOx and/or for the oxidation of hydrocarbons and carbon monoxide in exhaust gas from an internal combustion engine and more preferably for the simultaneous storage and conversion of NOx, selective catalytic reduction of NOx, and oxidation of hydrocarbons and carbon monoxide in exhaust gas from an internal combustion engine. According to the present invention it is particularly preferred that the catalyzed soot filter according to any of the particular and preferred embodiments as described in the present application or the emissions treatment system according to any of the particular and preferred embodiments as described in the present application is used for the selective catalytic reduction of NOx in exhaust gas from a diesel engine.

### EXPERIMENTAL SECTION

Throughout the examples and comparative examples in the following, unless indicated to the contrary, the values indicated in weight/volume and in particular in g/ft³ and g/in³ respectfully refer to the loading of the given element, compound, or material in the final catalyst based on the weight of the element or on the dry (calcined) weight of the compound or material per volume unit, wherein the volume refers to the volume of the monolith or honeycomb calculated based on its cross-sectional area and length. Accordingly, depending on the shape and dimensions of the monolith or honeycomb specifically employed for preparing the respective catalyst, the amounts of the element, compound or material and/or of their respective precursors are chosen such as to achieve the given loading as defined in the examples.

In instances wherein an element, compound, or material is provided only on a portion of the axial length of the monolith or honeycomb, unless otherwise specified, the loading refers to the weight on that axial portion of the monolith or honeycomb onto which the element, compound or material has been provided.

### Reference Example 1: Upstream LNT on flow through substrate

To prepare the LNT,
86.0 g/L (1.41 g/in³) of 50%/50% ceria/alumina material was impregnated with an aqueous solution of barium acetate (17.7 g/L (0.29 g/in³)BaO). The resulting powder was calcined at 590°C for 2 hours resulting in a Ba/Ceria material with 17 wt.-% BaO content.
61.0 g/L (1 g/in³) high porous γ-alumina was firstly impregnated with a platinum solution with platinum as an ammine stabilized hydroxo Pt IV complex to give a dry content of Pt 4.59 g/L (130 g/ft³)
and secondly with an aqueous solution of Palladium nitrate giving a final dry Pd content of 0.53 g/L (15 g/ft³). The resulting powder with a solid contend of 55- 65% was dispersed in water.

For Rh impregnation, ceria (24.4 g/L (0.4 g/in³) CeO₂) was dispersed into water to a solid content of 43%. A solution of Rh nitrate was added to the ceria slurry giving a final dry Rh content of 0.177 g/L (5 g/ft³).

For the Ba impregnation on ceria (121.17 g/L (1.995 g/in³) CeO₂), ceria was impregnated with an aqueous solution of barium acetate (6.4 g/L (0.105 g/in³)). The resulting powder was calcined at 590°C for 2 hours resulting in a Ba/Ceria material with 5 wt.-% BaO content.

The resulting Rh/Ceria slurry, Ba/Ceria material 128.1 g/L (2.1g/in³), Ba/Ce/AI material 103.7 g/L (1.7 g/in³), magnesium acetate tetrahydrate 18.3 g/L (0.3 g/in³ MgO) and zirconium acetate 3.1 g/L (0.05g/in³ ZrO2) were added to the Pt/Pd/alumina slurry. The subsequent slurry was milled to a particle size d90 of 9µm. The final slurry was subsequently coated onto a metallic flow through substrate. The coated substrate was dried at 110°C air and calcined at 590°C in air.

### Comparative Example 1: Wall flow filter with SCR coated inlet (100%) + Pd coated outlet (50%)

Copper Chabazite (CuCHA) was suspended in water to make a slurry with a solid content of 30-40%, after which this slurry was milled to D₉₀ = 6 µm. Separately, a pre-milled Al₂O₃ powder doped with 5% SiO₂ (90% of the particles are less than 5 micrometers: D₉₀ = 5 µm) was suspended in water to reach 25% solid content. A palladium nitrate solution (20 wt.-% in H₂O) was added into the suspension drop-wise while stirring to afford a loading of 0.95 wt.-% of Pd on the alumina powder doped with 5 wt.-% silica.

A wall flow filter honeycomb substrate made of silicon carbide with a porosity of 63% with a mean pore size of 20 µm and a volume of 2.47 liter was provided. Firstly, the Pd slurry was coated from the outlet side of the filter. To this effect, the substrate was immersed into the slurry with outlet side down with the inlet side held above the slurry level to achieve 50% coverage of the filter substrate. The substrate was pulled out of the slurry, and a stream of air was blown from the inlet side of the channels until no washcoat slurry was coming out from the outlet side. The coated sample was then dried at 110 °C for 2 hours and calcined in air at 450 °C for 1 hour, resulting in 50% of the outlet side of the filter being coated with 0.177 g/L (5 g/ft³) Pd on 9.2 g/L (0.15 g/in³) Al₂O₃ powder doped with 5% SiO₂.

Finally, the Cu-CHA slurry was then coated from the inlet side along the entire length of the filter by immersing the substrate the entire length of the inlet side, with the outlet side held 0.635 cm (¼ inch) above the slurry level. After blowing off the excess slurry from the outlet side, the coated sample was then dried at 110 °C for 2 hours and calcined in air at 450 °C for 1 hour, resulting in the below indicated percentage of the inlet side of the filter being coated with 67.1 g/L (1.1 g/in³) CuCHA.

### Comparative Example 3: Wall flow filter with LNT coated inlet (100%)

High porous alumina doped with 15 wt.-% MgO and 10 wt.-% ceria (dry content on substrate 0.030 g/L (0.85 g/ft³)) was firstly impregnated with a platinum solution with platinum as an ammine stabilized hydroxo Pt IV complex to give a dry Pt content of 1.765 g/L (50 g/ft³) and secondly with an aqueous solution of palladium nitrate giving a final dry Pd content of 0.177 g/L (5 g/ft³). The resulting powder with a solid content of 60-65% was dispersed in water.

For Rh impregnation high porous alumina doped with 20 wt.-% zirconia 12.2 g/L (0.2 g/in³) was impregnated with a solution of Rh nitrate (0.177 g/L (5 g/ft³) Rh calculated as the element). The resulting powder was calcined at 590°C for 2 hours resulting in a Rh/Zr/alumina material with 0.177 g/L (5 g/ft³) Rh content.

The resulting Rh/Zr/alumina material, ceria 27.5 g/L (0.45 g/in³), Barium acetate 11.3 g/L (0.185g/in³ BaO) and zirconium acetate 1.8 g/L (0.03 g/in³ ZrO₂) were added to the Pt/Pd/Mg/Ce/AI alumina slurry. The subsequent slurry was milled to a particle size d90 of 9µm.

A wall flow filter honeycomb substrate made of silicon carbide with a porosity of 63% with a mean pore size of 20 µm and a volume of 2.47 liter was provided.

The final slurry was then coated from the inlet side along the entire length of the filter by immersing the entire length of the substrate from the inlet side into the slurry. The outlet side was held 0,635 cm (¼ inch ) above the slurry level. After blowing off the excess slurry from the outlet side, the coated sample was then dried at 110 °C for 2 hours and calcined in air at 450 °C for 1 hour, resulting in the below indicated percentage of the inlet side of the filter being coated with 103.7 g/L (1.7 g/in³) LNT coating.

### Comparative Example 4: Wall flow filter with LNT coated inlet (50%)

An LNT slurry was prepared as described in Comparative Example 3.

A wall flow filter honeycomb substrate made of silicon carbide with a porosity of 63% with a mean pore size of 20 µm and a volume of 2.47 liter was provided.

The final slurry was coated from the inlet side along 50% of the length of the filter by immersing the substrate inlet side down into the slurry. The outlet side was held above the slurry level to achieve 50% coverage of the filter substrate. After blowing off the excess slurry from the outlet side, the coated sample was then dried at 110 °C for 2 hours and calcined in air at 450 °C for 1 hour, resulting in the below indicated percentage of the inlet side of the filter being coated with 103.7 g/L (1.7 g/in³) LNT coating.

### Example 1: Wall flow filter with LNT coated inlet (50%) + SCR coated outlet (50%)

An LNT slurry was prepared as described in Comparative Example 3.

For the Preparation of the SCR slurry for the outlet coat, Copper Chabazite (CuCHA) was suspended in water to make a slurry with a solid content of 30-40%. This slurry was milled to D₉₀ = 6 µm.

A wall flow filter honeycomb substrate made of silicon carbide with a porosity of 63% with a mean pore size of 20 µm and a volume of 2.47 liter was provided.

Firstly the final LNT slurry was coated from the inlet side along 50% of the length of the filter by immersing the substrate inlet side down into the slurry. The outlet side was held above the slurry level to achieve 50% coverage of the filter substrate. After blowing off the excess slurry from the outlet side, the coated sample was then dried at 110 °C for 2 hours and calcined in air at 450 °C for 1 hour, resulting in the below indicated percentage of the inlet side of the filter being coated with 103.7 g/L (1.7 g/in³) LNT coating.

Finally, the Cu-CHA slurry was then coated from the outlet side along 50% of the length of the filter by immersing the substrate outlet side down into the slurry. The inlet side was held above the slurry level to achieve 50% coverage of the filter substrate. After blowing off the excess slurry from the inlet side, the coated sample was then dried at 110 °C for 2 hours and calcined in air at 450 °C for 1 hour, resulting in the below indicated percentage of the inlet side of the filter being coated with 103.7 g/L (1.7 g/in³) CuCHA.

**Table 1: Overview of the catalyzed soot filter samples from Comparative Examples 1-4 and from Example 1.**

| Sample | (coating length) inlet coat material | (coating length) outlet coat material | total PGM loading [g/L] (Pt/Pd/Rh) |
|---|---|---|---|
| Comp. Example 1 | (100%) CuCHA | (100%) Pd-only | 0.088 (0/0.088/0) [2.5 g/ft³ (0/2.5/0)] |
| Comp. Example 3 | (100%) LNT | - | 2.118 (1.765/0.177/0.177) [60 g/ft³ (50/5/5)] |
| Comp. Example 4 | (50%) LNT | - | 1.059 (0.883/0.088/0.088) [30 g/ft³ (25/2.5/2.5)] |
| Example 1 | (50%) LNT | (50%) CuCHA | 1.059 (0.883/0.088/0.088) [30 g/ft³ (25/2.5/2.5)] |

### Example 2: World Light-Duty Harmonized (WLTC) Test Cycle- DeNOx , CO and HC Performance Evaluation

The coated filter substrates were evaluated as a passive SCR system with an upstream LNT for generating ammonia *in situ* prepared in accordance with Reference Example 1 on an engine test cell with standard WLTC procedure. The test cell was equipped with a Euro 6 2L engine. The average temperature in the first 1000s of the WLTC cycles was 240°C. Prior to testing, the samples were aged in an oven for 16 hours at 800°C under air flow with 10% water vapor. A rich engine mode was applied during the WLTC at 7 different positions in the cycle at Lambda 0.95 in order to regenerate the LNT from stored NOx. The NOx, CO and HC conversions over the LNT and over the downstream coated filter substrate were measured, as well as the maximum ammonia emissions in the exhaust gas after having passed the catalyzed soot filter. The results are displayed in Table 2.

**Table 2: Results from WLTC testing with respect to the conversion of NOₓ, CO, and hydrocarbons (HC) and to NH₃.**

| Sample | NOx Conversion [%] | CO Conversion [%] | HC Conversion [%] | Maximum NH₃ Emissions [ppm] |
|---|---|---|---|---|
| Ref. Example 1 | 55 | 94 | 79 | - |
| Comp. Example 1 | 64 | 94 | 79 | 12 |
| Comp. Example 3 | 65 | 98 | 82 | 1180 |
| Comp. Example 4 | 62 | 97 | 80 | 1180 |
| Example 1 | 68 | 98 | 82 | 50 |

As may be taken from Table 2, the results obtained with the inventive catalyzed soot filter according to Example 1 constitute the best results in NOₓ conversion, and are only matched by Comparative Example 3 with respect to CO and HC conversion. The outstanding results with respect to CO and HC conversion are highly unexpected in view of the fact that the inventive catalyzed soot filter according to Example 1 only contains half(!) the loading in platinum group metals compared to Comparative Example 3. Accordingly, as demonstrated by these results, it has quite surprisingly been found that a catalyzed soot filter may be provided by the present invention which not only affords a high conversion of NOₓ, in particular under passive SCR testing conditions employing an LNT located upstream of the catalyzed soot filter, but quite unexpectedly also allows for a high conversion of both CO and hydrocarbons despite that fact that only a reduced loading of platinum group metals is present thereon. All the more surprisingly, the ammonia slip in the inventive catalyst sample of Example 1 is extremely low even when compared to Comparative Examples 1, despite the fact that it only half the amount of SCR catalyst is contained therein. Finally, analysis of H₂S emissions in selected samples has revealed that compared to Comparative Example 3 which displays high H₂S levels in the exhaust gas, the sample of inventive Example 1 is able to effectively reduce H₂S emissions.

Consequently, in view of the results discussed above, the specific design of a catalyzed soot filter as defined in the present application affords a highly efficient catalyzed soot filter not only with respect to the conversion of the main exhaust gas pollutants which are NOₓ, CO, and hydrocarbons, but furthermore with respect to excess ammonia contained in the exhaust gas after treatment thereof as well as with respect to the treatment of H₂S therein. The inventive catalyst as defined in the present application therefore surprisingly displays an unexpectedly high proficiency in the treatment of exhaust gas not only with respect to the components contained there-in, but also with respect to ammonia generated in situ during the treatment process and which may effectively be prevented from slipping into the environment.

## Claims

1. A catalyzed soot filter (CSF), wherein the CSF comprises a porous wall flow substrate, a lean NOx trap (LNT) catalyst, and a catalyst for selective catalytic reduction (SCR),
the wall flow substrate comprising an inlet end, an outlet end, a substrate axial length extending between the inlet end and the outlet end, and a plurality of channels defined by internal walls of the wall flow substrate, wherein the plurality of channels comprise inlet channels having an open inlet end and a closed outlet end, and outlet channels having a closed inlet end and an open outlet end,
wherein the LNT catalyst is provided on a portion of the surface of the inlet channel walls and on at least a portion of the surface of the pores within the channel walls underneath the surface of the channel walls coated with the LNT catalyst, wherein the portion of the inlet channel walls coated with the LNT catalyst extends from the inlet end to x % of the substrate axial length with 0 < x < 100, wherein the LNT catalyst comprises one or more platinum group metals, wherein the LNT catalyst comprises one or more alkaline earth metals,
wherein the SCR catalyst is provided on a portion of the surface of the outlet channel walls and on at least a portion of the surface of the pores within the channel walls underneath the surface of the channel walls coated with the SCR catalyst, wherein the portion of the outlet channel walls coated with the SCR catalyst extends from the outlet end to 100-x % of the substrate axial length.

2. The catalyzed soot filter of claim 1, wherein x is in the range of from 5 to 95.

3. The catalyzed soot filter of claim 1 or 2, wherein the porous wall flow substrate is a honeycomb substrate with alternately plugged inlet and outlet ends such that each wall of the wall flow substrate respectively has a first surface which is a surface of an inlet channel and a second surface which is a surface of an outlet channel.

4. The catalyzed soot filter of any of claims 1 to 3, wherein the SCR catalyst comprises one or more zeolites.

5. The catalyzed soot filter of claim 4, wherein the one or more zeolites contain one or more transition metals.

6. The catalyzed soot filter of any of claims 1 to 5, wherein the average particle size D90 of the SCR catalyst is 25% or less of the average pore size of the walls of the substrate.

7. The catalyzed soot filter of any of claims 1 to 6, wherein the LNT catalyst comprises one or more oxygen storage components.

8. A method of preparing a catalyzed soot filter according to any one of claims 1 to 7 comprising
(i) providing a porous wall flow substrate comprising an inlet end, an outlet end, a substrate axial length extending between the inlet end and the outlet end, and a plurality of channels defined by internal walls of the wall flow substrate, wherein the plurality of channels comprise inlet channels having an open inlet end and a closed outlet end, and outlet channels having a closed inlet end and an open outlet end,
(ii) impregnating a particulate support material with an aqueous solution of a rhodium compound,
(iii) calcining the impregnated particulate support material obtained in (ii) for providing a supported Rh powder,
(iv) mixing a particulate support material with distilled water and subsequently adding an aqueous solution of a palladium compound and of a platinum compound thereto for providing a first slurry,
(v) adding the supported Rh powder, one or more oxygen storage materials, and one or more alkaline earth metal compounds to the first slurry obtained in (iv) for providing a second slurry,
(vi) optionally milling the second slurry, wherein said second slurry displays an average particle size D90 which is 25% or less of the average pore size of the walls of the porous wall flow substrate,
(vii) suspending a solid SCR catalyst in distilled water and optionally milling the resulting mixture for providing a third slurry, wherein said third slurry displays an average particle size D90 which is 25% or less of the average pore size of the walls of the porous wall flow substrate,
(viii) coating a portion of the inlet channel walls of the wall flow substrate by immersing the inlet end of the wall flow substrate into the second slurry up to x% of the substrate axial length extending from the inlet end with 0 < x < 100,
(ix) removing the wall flow substrate from the second slurry and removing excess slurry from the inlet channels,
(x) coating a portion of the outlet channel walls of the wall flow substrate by immersing the oulet end of the wall flow substrate into the third slurry up to 100-x% of the substrate axial length extending from the outlet end,
(xi) removing the wall flow substrate from the third slurry and removing excess slurry from the outlet channels,
(xii) optionally drying and/or calcining the coated wall flow substrate.

9. An emissions treatment system comprising a catalyzed soot filter (CSF) according to any of claims 1 to 7 and lean NOx trap (LNT) located upstream of the CSF, wherein the LNT and the CSF are in fluid communication with one another such that exhaust gas from an internal combustion engine may flow through the LNT and subsequently through the CSF, wherein the LNT comprises a flow through substrate comprising an inlet end, an outlet end, a substrate axial length extending between the inlet end and the outlet end, and a plurality of channels defined by internal walls of the wall flow substrate, and wherein the flow through substrate is coated with an LNT catalyst.

10. The emissions treatment system according to claim 9, wherein the LNT catalyst comprises one or more alkaline earth metals.

11. The emissions treatment system according to claim 9 or 10, wherein the LNT catalyst comprises one or more platinum group metals.

12. A process for the treatment of emissions from an internal combustion engine comprising directing exhaust gas from an internal combustion engine through an emissions treatment system as defined in any of claims 9 to 11.

13. Use of a catalyzed soot filter according to any of claims 1 to 7, or of an emissions treatment system according to any of claims 9 to 11 for the treatment of exhaust gas emissions.

## Patentansprüche

1. Katalytischer Rußfilter (Catalyzed Soot Filter, CSF), wobei der CSF ein poröses Wandstromsubstrat, einen LNT-Katalysator (NOx-Speicherkatalysator, LNT = Lean NOx Trap) und einen Katalysator für die selektive katalytische Reduktion (Selective Catalytic Reduction, SCR) umfasst,
wobei das Wandstromsubstrat ein Einlassende, ein Auslassende, eine sich zwischen dem Einlassende und dem Auslassende erstreckende axiale Substratlänge und mehrere durch Innenwände des Wandstromsubstrats definierte Kanäle umfasst,
wobei die mehreren Kanäle Einlasskanäle mit einem offenen Einlassende und einem geschlossenen Auslassende und Auslasskanäle mit einem geschlossenen Einlassende und einem offenen Auslassende umfassen,
wobei der LNT-Katalysator auf einem Teil der Oberfläche der Einlasskanalwände und auf mindestens einem Teil der Oberfläche der Poren in den Kanalwänden unter der Oberfläche der mit dem LNT-Katalysator beschichteten Kanalwände bereitgestellt ist, wobei sich der Teil der mit dem LNT-Katalysator beschichteten Einlasskanalwände vom Einlassende bis x % der axialen Substratlänge mit 0 < x < 100 erstreckt, wobei der LNT-Katalysator ein oder mehrere Platingruppenmetalle umfasst, wobei der LNT-Katalysator ein oder mehrere Erdalkalimetalle umfasst,
wobei der SCR-Katalysator auf einem Teil der Oberfläche der Auslasskanalwände und auf mindestens einem Teil der Oberfläche der Poren in den Kanalwänden unter der Oberfläche der mit dem SCR-Katalysator beschichteten Kanalwände bereitgestellt ist, wobei sich der Teil der mit dem SCR-Katalysator beschichteten Auslasskanalwände vom Auslassende bis 100-x % der axialen Substratlänge erstreckt.

2. Katalytischer Rußfilter nach Anspruch 1, wobei x im Bereich von 5 bis 95 liegt.

3. Katalytischer Rußfilter nach Anspruch 1 oder 2, wobei es sich bei dem porösen Wandstromsubstrat um ein Wabensubstrat mit alternierend verschlossenen Einlass- und Auslassenden handelt, so dass jede Wand des Wandstromsubstrats jeweils eine erste Oberfläche, bei der es sich um eine Oberfläche eines Einlasskanals handelt, und eine zweite Oberfläche, bei der es sich um eine Oberfläche eines Auslasskanals handelt, aufweist.

4. Katalytischer Rußfilter nach einem der Ansprüche 1 bis 3, wobei der SCR-Katalysator einen oder mehrere Zeolithe umfasst.

5. Katalytischer Rußfilter nach Anspruch 4, wobei der eine Zeolith bzw. die mehreren Zeolithe ein oder mehrere Übergangsmetalle umfasst bzw. umfassen.

6. Katalytischer Rußfilter nach einem der Ansprüche 1 bis 5, wobei die durchschnittliche Teilchengröße D90 des SCA-Katalysators 25 % oder weniger der durchschnittlichen Porengröße der Wände des Substrats beträgt.

7. Katalytischer Rußfilter nach einem der Ansprüche 1 bis 6, wobei der LNT-Katalysator eine oder mehrere Sauerstoffspeicherkomponenten umfasst.

8. Verfahren zum Herstellen eines katalytischen Rußfilters nach einem der Ansprüche 1 bis 7, das Folgendes umfasst:
(i) Bereitstellen eines porösen Wandstromsubstrats mit einem Einlassende, einem Auslassende, einer sich zwischen dem Einlassende und dem Auslassende erstreckenden axialen Substratlänge und mehreren durch Innenwände des Wandstromsubstrats definierten Kanälen, wobei die mehreren Kanäle Einlasskanäle mit einem offenen Einlassende und einem geschlossenen Auslassende und Auslasskanäle mit einem geschlossenen Einlassende und einem offenen Auslassende umfassen,
(ii) Imprägnieren eines teilchenförmigen Trägermaterials mit einer wässrigen Lösung einer Rhodiumverbindung,
(iii) Calcinieren des in (ii) erhaltenen imprägnierten teilchenförmigen Trägermaterials zur Bereitstellung eines geträgerten Rh-Pulvers,
(iv) Mischen eines teilchenförmigen Trägermaterials mit destilliertem Wasser und anschließendes Zugeben einer wässrigen Lösung einer Palladiumverbindung und einer Platinverbindung zur Bereitstellung einer ersten Aufschlämmung,
(v) Zugeben des geträgerten Rh-Pulvers, eines oder mehrerer Sauerstoffspeichermaterialien und einer oder mehrerer Erdalkalimetallverbindungen zu der in (iv) erhaltenen ersten Aufschlämmung zur Bereitstellung einer zweiten Aufschlämmung,
(vi) gegebenenfalls Mahlen der zweiten Aufschlämmung, wobei die zweite Aufschlämmung eine durchschnittliche Teilchengröße (D90) aufweist, die 25 % oder weniger der durchschnittlichen Porengröße der Wände des porösen Wandstromsubstrats beträgt,
(vii) Suspendieren eines festen SCR-Katalysators in destilliertem Wasser und gegebenenfalls Mahlen der resultierenden Mischung zur Bereitstellung einer dritten Aufschlämmung, wobei die dritte Aufschlämmung eine durchschnittliche Teilchengröße (D90) aufweist, die 25 % oder weniger der durchschnittlichen Porengröße der Wände des porösen Wandstromsubstrats beträgt,
(viii) Beschichten eines Teils der Einlasskanalwände des Wandstromsubstrats durch Eintauchen des Einlassendes des Wandstromsubstrats in die zweite Aufschlämmung bis zu x % der sich vom Einlassende erstreckenden axialen Substratlänge mit 0 < x < 100,
(ix) Herausnehmen des Wandstromsubstrats aus der zweiten Aufschlämmung und Entfernen von überschüssiger Aufschlämmung aus den Einlasskanälen,
(x) Beschichten eines Teils der Auslasskanalwände des Wandstromsubstrats durch Eintauchen des Auslassendes des Wandstromsubstrats in die dritte Aufschlämmung bis zu 100-x % der sich vom Auslassende erstreckenden axialen Substratlänge,
(xi) Herausnehmen des Wandstromsubstrats aus der dritten Aufschlämmung und Entfernen von überschüssiger Aufschlämmung aus den Auslasskanälen,
(xii) gegebenenfalls Trocknen und/oder Calcinieren des beschichteten Wandstromsubstrats.

9. Emissionsbehandlungssystem, umfassend einen katalytischen Rußfilter (Catalyzed Soot Filter, CSF) nach einem der Ansprüche 1 bis 7 und einen stromaufwärts des CSF angeordneten NOx-Speicherkatalysator (LNT), wobei der LNT und der CSF derart miteinander in Fließverbindung stehen, dass Abgas von einem Verbrennungsmotor durch den LNT und anschließend durch den SCF strömen kann, wobei der LNT ein Durchflusssubstrat mit einem Einlassende, einem Auslassende, einer sich zwischen dem Einlassende und dem Auslassende erstreckenden axialen Substratlänge und mehrere durch Innenwände des Wandstromsubstrats definierte Kanäle umfasst, und wobei das Durchflusssubstrat mit einem LNT-Katalysator beschichtet ist.

10. Emissionsbehandlungssystem nach Anspruch 9, wobei der LNT-Katalysator ein oder mehrere Erdalkalimetalle umfasst.

11. Emissionsbehandlungssystem nach Anspruch 9 oder 10, wobei der LNT-Katalysator ein oder mehrere Platingruppenmetalle umfasst.

12. Verfahren zur Behandlung von Emissionen aus einem Verbrennungsmotor, bei dem man Abgas aus einem Verbrennungsmotor durch ein Emissionsbehandlungssystem gemäß einem der Ansprüche 9 bis 11 führt.

13. Verwendung eines katalytischen Rußfilters nach einem der Ansprüche 1 bis 7 oder eines Emissionsbehandlungssystems nach einem der Ansprüche 9 bis 11 zur Behandlung von Abgasemissionen.

## Revendications

1. Filtre à suie catalysé (CSF), le CSF comprenant un substrat à écoulement par les parois poreux, un catalyseur piège à NOx pour mélange pauvre (LNT), et un catalyseur de réduction catalytique sélective (SCR),
le substrat à écoulement par les parois comprenant une extrémité d'entrée, une extrémité de sortie, une longueur axiale de substrat s'étendant entre l'extrémité d'entrée et l'extrémité de sortie, et une pluralité de canaux définis par des parois internes du substrat à écoulement par les parois, la pluralité de canaux comprenant des canaux d'entrée ayant une extrémité d'entrée ouverte et une extrémité de sortie fermée, et des canaux de sortie ayant une extrémité d'entrée fermée et une extrémité de sortie ouverte,
le catalyseur LNT étant disposé sur une partie de la surface des parois de canaux d'entrée et sur au moins une partie de la surface des pores à l'intérieur des parois de canaux sous la surface des parois de canaux revêtue du catalyseur LNT, la partie des parois de canaux d'entrée revêtue du catalyseur LNT s'étendant depuis l'extrémité d'entrée jusqu'à x % de la longueur axiale de substrat avec 0 < x < 100, le catalyseur LNT comprenant un ou plusieurs métaux du groupe du platine, le catalyseur LNT comprenant un ou plusieurs métaux alcalino-terreux,
le catalyseur SCR étant disposé sur une partie de la surface des parois de canaux de sortie et sur au moins une partie de la surface des pores à l'intérieur des parois de canaux sous la surface des parois de canaux revêtue du catalyseur SCR, la partie des parois de canaux de sortie revêtue du catalyseur SCR s'étendant depuis l'extrémité de sortie jusqu'à 100-x % de la longueur axiale de substrat.

2. Filtre à suie catalysé de la revendication 1, dans lequel x se situe dans la gamme de 5 à 95.

3. Filtre à suie catalysé de la revendication 1 ou 2, dans lequel le substrat à écoulement par les parois poreux est un substrat en nid d'abeilles avec des extrémités d'entrée et de sortie alternativement bouchées de telle sorte que chaque paroi du substrat à écoulement par les parois a respectivement une première surface qui est une surface d'un canal d'entrée et une deuxième surface qui est une surface d'un canal de sortie.

4. Filtre à suie catalysé de l'une quelconque des revendications 1 à 3, dans lequel le catalyseur SCR comprend une ou plusieurs zéolithes.

5. Filtre à suie catalysé de la revendication 4, dans lequel la ou les zéolithes contiennent un plusieurs métaux de transition.

6. Filtre à suie catalysé de l'une quelconque des revendications 1 à 5, dans lequel la taille moyenne de particules D90 du catalyseur SCR représente 25 % ou moins de la taille moyenne de pores des parois du substrat.

7. Filtre à suie catalysé de l'une quelconque des revendications 1 à 6, dans lequel le catalyseur LNT comprend un ou plusieurs composants de stockage d'oxygène.

8. Procédé de préparation d'un filtre à suie catalysé selon l'une quelconque des revendications 1 à 7 comprenant
(i) l'obtention d'un substrat à écoulement par les parois poreux comprenant une extrémité d'entrée, une extrémité de sortie, une longueur axiale de substrat s'étendant entre l'extrémité d'entrée et l'extrémité de sortie, et une pluralité de canaux définis par des parois internes du substrat à écoulement par les parois, la pluralité de canaux comprenant des canaux d'entrée ayant une extrémité d'entrée ouverte et une extrémité de sortie fermée, et des canaux de sortie ayant une extrémité d'entrée fermée et une extrémité de sortie ouverte,
(ii) l'imprégnation d'un matériau de support particulaire avec une solution aqueuse d'un composé de rhodium,
(iii) la calcination du matériau de support particulaire imprégné obtenu en (ii) pour obtenir une poudre de Rh sur support,
(iv) le mélange d'un matériau de support particulaire avec de l'eau distillée puis l'ajout d'une solution aqueuse d'un composé de palladium et d'un composé de platine à ceux-ci pour obtenir une première bouillie,
(v) l'ajout de la poudre de Rh sur support, d'un ou plusieurs matériaux de stockage d'oxygène et d'un ou plusieurs composés de métaux alcalino-terreux à la première bouillie obtenue en (iv) pour obtenir une deuxième bouillie,
(vi) éventuellement, le broyage de la deuxième bouillie, ladite deuxième suspension présentant une taille moyenne de particules D90 qui représente 25 % ou moins de la taille moyenne de pores des parois du substrat à écoulement par les parois poreux,
(vii) la mise en suspension d'un catalyseur SCR solide dans de l'eau distillée et éventuellement le broyage du mélange résultant pour obtenir une troisième bouillie, ladite troisième bouillie présentant une taille moyenne de particules D90 qui représente 25 % ou moins de la taille moyenne de pores des parois du substrat à écoulement par les parois poreux,
(viii) le revêtement d'une partie des parois de canaux d'entrée du substrat à écoulement par les parois par immersion de l'extrémité d'entrée du substrat à écoulement par les parois dans la deuxième bouillie jusqu'à x % de la longueur axiale de substrat s'étendant depuis l'extrémité d'entrée avec 0 < x < 100,
(ix) le retrait du substrat à écoulement par les parois de la deuxième bouillie et le retrait de l'excès de bouillie des canaux d'entrée,
(x) le revêtement d'une partie des parois de canaux de sortie du substrat à écoulement par les parois par immersion de l'extrémité de sortie du substrat à écoulement par les parois dans la troisième bouillie jusqu'à 100-x % de la longueur axiale de substrat s'étendant depuis l'extrémité de sortie,
(xi) le retrait du substrat à écoulement par les parois de la troisième bouillie et le retrait de l'excès de bouillie des canaux de sortie,
(xii) éventuellement, le séchage et/ou la calcination du substrat à écoulement par les parois revêtu.

9. Système de traitement d'émissions comprenant un filtre à suie catalysé (CSF) selon l'une quelconque des revendications 1 à 7 et un piège à NOx pour mélange pauvre (LNT) situé en amont du CSF, dans lequel le LNT et le CSF sont en communication fluidique l'un avec l'autre de telle sorte que du gaz d'échappement d'un moteur à combustion interne peut s'écouler à travers le LNT puis à travers le CSF, dans lequel le LNT comprend un substrat à écoulement par les parois comprenant une extrémité d'entrée, une extrémité de sortie, une longueur axiale de substrat s'étendant entre l'extrémité d'entrée et l'extrémité de sortie, et une pluralité de canaux définis par des parois internes du substrat à écoulement par les parois, et dans lequel le substrat à écoulement continu est revêtu d'un catalyseur LNT.

10. Système de traitement d'émissions selon la revendication 9, dans lequel le catalyseur LNT comprend un ou plusieurs métaux alcalino-terreux.

11. Système de traitement d'émissions selon la revendication 9 ou 10, dans lequel le catalyseur LNT comprend un ou plusieurs métaux du groupe du platine.

12. Procédé de traitement d'émissions d'un moteur à combustion interne comprenant l'acheminement de gaz d'échappement d'un moteur à combustion interne à travers un système de traitement d'émissions tel que défini dans l'une quelconque des revendications 9 à 11.

13. Utilisation d'un filtre à suie catalysé selon l'une quelconque des revendications 1 à 7, ou d'un système de traitement d'émissions selon l'une quelconque des revendications 9 à 11, pour le traitement d'émissions de gaz d'échappement.
